(19) **Europäisches Patentamt / European Patent Office / Office européen des brevets**

(11) **EP 4 755 985 A1**

(12) **EUROPEAN PATENT APPLICATION**
published in accordance with Art. 153(4) EPC

(43) Date of publication:
**10.06.2026 Bulletin 2026/24**

(21) Application number: **24849293.6**

(22) Date of filing: **02.08.2024**

(51) International Patent Classification (IPC):
*C09J 151/00* (2006.01)    *B32B 27/00* (2006.01)
*B32B 27/30* (2006.01)    *C08F 220/00* (2006.01)
*C09J 7/22* (2018.01)    *C09J 7/24* (2018.01)
*C09J 7/38* (2018.01)    *C09J 11/08* (2006.01)
*C09J 123/00* (2006.01)    *C09J 133/00* (2006.01)
*C09J 133/02* (2006.01)    *C09J 133/04* (2006.01)
*C09J 133/06* (2006.01)    *C09J 133/14* (2006.01)

(52) Cooperative Patent Classification (CPC):
**B32B 27/00; B32B 27/30; B32B 27/32;
C08F 220/00; C09J 7/22; C09J 7/24; C09J 7/38;
C09J 11/08; C09J 123/00; C09J 133/00;
C09J 133/02; C09J 133/04; C09J 133/06;
C09J 133/14; C09J 151/00**

(86) International application number:
**PCT/JP2024/027687**

(87) International publication number:
**WO 2025/028648 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  02.08.2023  JP 2023126510
26.04.2024  JP 2024073064

(71) Applicant: **Sekisui Chemical Co., Ltd.**
**Osaka-shi, Osaka 530-8565 (JP)**

(72) Inventors:
• **OGATA, Nagisa**
**Mishima-gun, Osaka 618-0021 (JP)**
• **II, Daizo**
**Mishima-gun, Osaka 618-0021 (JP)**
• **TODA, Tomoki**
**Mishima-gun, Osaka 618-0021 (JP)**
• **OGATA, Yudai**
**Mishima-gun, Osaka 618-0021 (JP)**
• **HIDA, Tomohiro**
**Inukami-gun, Shiga 522-0314 (JP)**
• **HAMASAKI, Daisuke**
**Tsukuba-shi, Ibaraki 300-4292 (JP)**

(74) Representative: **Cabinet Beau de Loménie
103, rue de Grenelle / CS 90800
75340 Paris Cedex 07 (FR)**

(54) **COMPOSITE STRUCTURE, POLYOLEFIN RESIN MOLDED BODY, MOTOR VEHICLE MEMBER, AND METHOD FOR PRODUCING POLYOLEFIN RESIN MOLDED BODY**

(57)    The present invention aims to provide a composite structure that allows the adhesive member and the adherend member to be recycled without separation. The present invention also aims to provide a polyolefin resin molded article molded from the composite structure. The present invention also aims to provide an automobile member including the composite structure or the polyolefin resin molded article. The present invention also aims to provide a method for producing a polyolefin resin molded article using the composite structure. Provided is a composite structure including: an adhesive member; and an adherend member, the adhesive member including an adhesive formed from an adhesive composition, the adhesive composition containing an acrylic copolymer including a structural unit derived from an alkyl (meth)acrylate and a structural unit derived from an olefin polymer having a polymerizable unsaturated double bond at an end, the adherend member including a member containing a polyolefin resin.

**Description**

TECHNICAL FIELD

The present invention relates to a composite structure. The present invention relates to a polyolefin resin molded article obtained from the composite structure. The present invention also relates to an automobile member. The present invention also relates to a method for producing a polyolefin resin molded article.

BACKGROUND ART

Adhesive tapes including an adhesive layer containing an adhesive have been widely used to fix components in electronic devices, vehicles, houses, and building materials (see Patent Literatures 1 to 3, for example). Specifically, for example, adhesive tapes are used to bond a cover panel for protecting a surface of a portable electronic device to a touch panel module or display panel module, or to bond a touch panel module to a display panel module.

CITATION LIST

- Patent Literature

Patent Literature 1: JP 2015-052050 A
Patent Literature 2: JP 2015-021067 A
Patent Literature 3: JP 2015-120876 A

SUMMARY OF INVENTION

- Technical problem

To address environmental problems, collecting and recycling of used resources have been desired. Recycling has been ongoing also in the automotive industry. Typical automotive recycling involves, sequentially, dismantling end-of-life vehicles by removing engines, doors, catalysts, resin components, and other recyclable or easily removable components, pressing the remaining parts of the vehicles, followed by shredding the pressed material and then separating metals, such as iron, therefrom.

Automobile shredder residue (ASR) remaining after the separation of metals (e.g., iron) contains resin, metal, paper, wood, and the like. To improve the automotive recycling efficiency, ASR is desirably also recycled. In particular, recycling of resin, which constitutes a large part of ASR, has been desired. However, the resin contained in ASR is a mixture of various resins originating from many sources, such as automobile members or adhesive for fixing automobile members. Recycling the mixture directly often results in low-quality resin. Separation of the resins may be attempted to achieve higher quality, but collection and separation of the resins are highly time-consuming and costly. Thus, recycling of the resin in ASR remains insufficient at present.

Recycling of the resin components removed before pressing also remains insufficient at present, as these components are a mixture of various resins originating from many sources, such as adhesive.

The present invention aims to provide a composite structure that allows the adhesive member and the adherend member to be recycled without separation. The present invention also aims to provide a polyolefin resin molded article molded from the composite structure. The present invention also aims to provide an automobile member including the composite structure or the polyolefin resin molded article. The present invention also aims to provide a method for producing a polyolefin resin molded article using the composite structure.

- Solution to problem

The disclosure 1 relates to a composite structure including: an adhesive member; and an adherend member, the adhesive member including an adhesive formed from an adhesive composition, the adhesive composition containing an acrylic copolymer including a structural unit derived from an alkyl (meth)acrylate and a structural unit derived from an olefin polymer having a polymerizable unsaturated double bond at an end, the adherend member including a member containing a polyolefin resin.

The disclosure 2 relates to the composite structure according to the disclosure 1, wherein two or more types of the adherend members are bonded to each other with the adhesive member.

The disclosure 3 relates to the composite structure according to the disclosure 1 or 2, wherein the polyolefin resin in the adherend member includes a polypropylene block copolymer.

The disclosure 4 relates to the composite structure according to the disclosure 1, 2, or 3, wherein the adherend member contains at least one colorant selected from the group consisting of a pigment and a dye.

The disclosure 5 relates to the composite structure according to the disclosure 1, 2, 3, or 4, wherein in the adhesive composition, a proportion of the structural unit derived from an olefin polymer having a polymerizable unsaturated double bond at an end in the acrylic copolymer is 5% by mass or more, and the composite structure satisfies at least one feature selected from the group consisting of the following first feature, second feature, and third feature:

first feature: (1) the structural unit derived from an alkyl (meth)acrylate includes no structural unit derived from an alkyl (meth)acrylate containing an alcohol-derived C1-C4 alkyl group, or the structural unit derived from an alkyl (meth)acrylate includes a structural unit derived from an alkyl (meth)acrylate containing an alcohol-derived C1-C4 alkyl group and a proportion of the structural unit derived from an alkyl (meth)acrylate containing an alcohol-derived C1-C4 alkyl group in the acrylic copolymer is 30% by mass or less, and (2) the adhesive has a gel fraction of 10% by mass or more and 90% by mass or less;

second feature: (1) the structural unit derived from an alkyl (meth)acrylate includes a structural unit derived from an alkyl (meth)acrylate containing an alcohol-derived C1-C4 alkyl group, and a proportion of the structural unit derived from an alkyl (meth)acrylate containing an alcohol-derived C1-C4 alkyl group in the acrylic copolymer is more than 10% by mass and 60% by mass or less, and (2) the adhesive has a gel fraction of 55% by mass or less; and

third feature: (1) the acrylic copolymer has an SP value of 9.30 $(cal/cm^3)^{1/2}$ or greater and 9.95 $(cal/cm^3)^{1/2}$ or less, and (2) the adhesive has a gel fraction of 10% by mass or more and 55% by mass or less.

The disclosure 6 relates to the composite structure according to the disclosure 1, 2, 3, 4, or 5, wherein the acrylic copolymer includes a structural unit derived from a monomer containing a polar functional group, the structural unit derived from a monomer containing a polar functional group includes at least one selected from the group consisting of a structural unit derived from a carboxy group-containing monomer and a structural unit derived from a hydroxy group-containing monomer.

The disclosure 7 relates to the composite structure according to the disclosure 6, wherein the structural unit derived from a monomer containing a polar functional group includes the structural unit derived from a hydroxy group-containing monomer.

The disclosure 8 relates to the composite structure according to the disclosure 7, wherein the structural unit derived from an alkyl (meth)acrylate includes a structural unit derived from an alkyl (meth)acrylate containing an alcohol-derived C7 or higher alkyl group, and a proportion of the structural unit derived from an alkyl (meth)acrylate containing an alcohol-derived C7 or higher alkyl group in the acrylic copolymer is 5% by mass or more and 90% by mass or less, the structural unit derived from a monomer containing a polar functional group includes no structural unit derived from a carboxy group-containing monomer, or the structural unit derived from a monomer containing a polar functional group includes the structural unit derived from a carboxy group-containing monomer, and a proportion of the structural unit derived from a carboxy group-containing monomer in the acrylic copolymer is 8% by mass or less, and a proportion of the structural unit derived from a hydroxy group-containing monomer in the acrylic copolymer is 0.01% by mass or more.

The disclosure 9 relates to the composite structure according to the disclosure 1, 2, 3, 4, 5, 6, 7, or 8, wherein the adhesive contains a tackifier resin.

The disclosure 10 relates to the composite structure according to the disclosure 9, wherein the adhesive contains the tackifier resin in an amount of 40 parts by mass or less relative to 100 parts by mass of the acrylic copolymer.

The disclosure 11 relates to the composite structure according to the disclosure 1, 2, 3, 4, 5, 6, 7, 8, 9, or 10, wherein the adhesive member is an adhesive tape including an adhesive layer containing the adhesive.

The disclosure 12 relates to the composite structure according to the disclosure 11, wherein the adhesive layer has a thickness of 5 μm or greater and 75 μm or less.

The disclosure 13 relates to the composite structure according to the disclosure 11 or 12, wherein the adhesive tape includes no substrate.

The disclosure 14 relates to the composite structure according to the disclosure 11 or 12, wherein the adhesive tape includes a substrate, and the substrate contains a polyolefin resin.

The disclosure 15 relates to the composite structure according to the disclosure 11, 12, 13, or 14, wherein the adhesive tape has a 180° peel force at 23°C for a polypropylene plate of 5.0 N/25 mm or greater.

The disclosure 16 relates to the composite structure according to the disclosure 1, 2, 3, 4, 5, 6, 7, 8, 9, 10, 11, 12, 13, 14, or 15, wherein a proportion of the adhesive member in the composite structure is 0.1% by mass or more and 3.0% by mass or less.

The disclosure 17 relates to the composite structure according to the disclosure 1, 2, 3, 4, 5, 6, 7, 8, 9, 10, 11, 12, 13, 14, 15, or 16, including a primer layer between the adherend member and the adhesive member.

The disclosure 18 relates to the composite structure according to the disclosure 17, wherein the primer layer contains a primer that is at least one selected from the group consisting of a polyolefin primer, a urethane primer, and a metal alkoxide primer.

The disclosure 19 relates to a polyolefin resin molded article molded from the composite structure according to the disclosure 1, 2, 3, 4, 5, 6, 7, 8, 9, 10, 11, 12, 13, 14, 15, 16, 17, or 18.

The disclosure 20 relates to an automobile member including: the composite structure according to the disclosure 1, 2, 3, 4, 5, 6, 7, 8, 9, 10, 11, 12, 13, 14, 15, 16, 17, or 18; or the polyolefin resin molded article according to the disclosure 19.

The disclosure 21 relates to a method for producing a polyolefin resin molded article, including a step of molding the composite structure according to the disclosure 1, 2, 3, 4, 5, 6, 7, 8, 9, 10, 11, 12, 13, 14, 15, 16, 17, or 18 without separation.

The present invention is described in detail below.

The present inventors focused on the fact that automotive resins contain large amounts of polyolefin resins, such as polypropylene, and considered reducing the quality decrease of the resin obtained by recycling multiple automotive resins without separation. The present inventors considered a composite structure including an adhesive member and an adherend member, and selected a member containing a polyolefin resin as the adherend member and used an acrylic copolymer having a specific feature as the adhesive of the adhesive member. As a result, the inventors found out that such a composite structure allows the adherend member and the adhesive member to be recycled without separation. The present invention was thus completed.

The composite structure of the present invention includes an adhesive member and an adherend member. The composite structure of the present invention allows the adhesive member and the adherend member to be recycled without separation, reducing the environmental load.

In the composite structure of the present invention, from the standpoint of the handleability in the recycling step, preferably, the two or more types of adherend members are bonded to each other with the adhesive member. The two or more types of adherend members may be the same as or different from each other. Two or more types of adherend members being different from each other means that the adherend members are different in at least one of material or shape.

The adherend member includes a member containing a polyolefin resin.

The "polyolefin resin" herein needs only to be a resin including an olefin-derived structural unit, and may be a copolymer including a structural unit other than the olefin-derived structural unit. Examples of the copolymer including a structural unit other than an olefin-derived structural unit include polyolefin rubbers and polyolefin block copolymers.

Examples of the polyolefin resin in the adherend member include thermoplastic olefin resins and thermosetting olefin resins. Preferred among these are thermoplastic olefin resins, because they facilitate melting under heat in recycling. Examples of the thermoplastic olefin resins include polyethylene, polypropylene, ethylene-vinyl acetate copolymer resins (EVA), ethylene-ethyl acrylate copolymer resins (EEA), ethylene-methyl methacrylate copolymer resins (EMMA), thermoplastic polyolefin elastomers (TPO), ethylene propylene rubbers (EPDM), and polypropylene block copolymers. To further improve the impact resistance of the adherend member, the polyolefin resin in the adherend member preferably contains a polypropylene block copolymer.

Examples of the polypropylene block copolymer include copolymers containing a propylene block copolymerized with ethylene.

In the adherend member, the lower limit of the proportion of the olefin-derived structural unit in the polyolefin resin is preferably 50% by mass. When the preferable lower limit of the proportion of the olefin-derived structural unit is 50% by mass or more, the resin obtained by recycling the composite structure of the present invention can have further improved quality, making it easier to recycle the composite structure of the present invention without separation. The lower limit of the proportion of the olefin-derived structural unit is more preferably 75% by mass, still more preferably 90% by mass.

In the adherend member, the higher the proportion of the olefin-derived structural unit in the polyolefin resin, the better. The proportion may be 100% by mass.

In the adherend member, the polyolefin resin most preferably consists only of the olefin-derived structural unit.

Examples of the olefin-derived structural unit in the polyolefin resin in the adherend member include a propylene-derived structural unit, an ethylene-derived structural unit, an isoprene-derived structural unit, a butadiene-derived structural unit, and a butylene-derived structural unit. To more easily recycle the composite structure of the present invention without separation, the olefin-derived structural unit preferably includes a propylene-derived structural unit.

In the adherend member, examples of the polyolefin resin consisting only of the olefin-derived structural unit include polypropylene, polyethylene, polyisoprene, cycloolefins, cycloolefin copolymers, polybutadiene, and polybutylene. To more easily recycle the composite structure of the present invention without separation, the polyolefin resin preferably includes polypropylene.

The adherend member may contain one resin or two or more resins. In the case that the adherend member contains two or more resins, a main component among all the resins in the adherend member is preferably the polyolefin resin. The lower limit of the proportion of the polyolefin resin is preferably 50% by mass of all the resins. When the proportion of the olefin resin is 50% by mass or more, the resin obtained by recycling the composite structure of the present invention can have further improved quality, making it easier to recycle the composite structure of the present invention without separation. In the case that the adherend member contains two or more resins, the lower limit of the proportion of the olefin resin is more preferably 70% by mass, still more preferably 90% by mass. The higher the proportion of the polyolefin resin, the better. The proportion may be 100% by mass (i.e., all the resins contained in the adherend member are polyolefin resins).

The adherend member may contain at least one selected from the group consisting of a pigment and a dye. Even when the composite structure contains at least one selected from the group consisting of a pigment and a dye, recycling of the composite structure of the present invention without separation can be performed without problems.

Preferably, the adherend member has been surface-treated. The surface-treated adherend member can more closely adhere to the adhesive member. This can prevent peeling of the adhesive member from the adherend member in cutting or shredding the composite structure of the present invention in the recycling step, leading to improved handleability. As a result, the composite structure of the present invention can be recycled without separation more easily.

Examples of the surface treatment include acid modification of an adherend surface to increase the polarity of the adherend surface, and corona treatment of an adherend surface.

A specific example of a method for acid-modifying an adherend surface is to apply maleic acid-modified polypropylene to the adherend surface.

The composite structure of the present invention is not limited as long as it includes the adhesive member, such as a liquid adhesive or an adhesive tape, and the adherend member containing a polyolefin resin. Specific examples thereof include composite materials obtained by bonding, with a liquid adhesive and/or an adhesive tape, automobile members such as fenders, door outer panels, back doors, hoods (front hoods, engine hoods), trunk lids, bumpers, wheel covers, caps, mudguards, bumper under guards, spoilers such as side sill spoilers and rear spoilers, fender liners, engine under covers, housing for taillights, indicators, brake lights, etc., air intake pipes, air cleaner casings, resonators, front end modules, cooling fans, fan shrouds, instrument panels, console boxes, glove boxes, steering wheels, shift levers, accelerator pedals, door trims, seats, headrests, roof components, floor carpet components, pillar garnishes, armrests, interior lamps, room mirror housings, assist grips, or air conditioning modules; and such automobile members themselves that are formed by bonding components thereof with a liquid adhesive and/or an adhesive tape.

The adhesive member includes an adhesive formed from an adhesive composition.

The formation of the adhesive from the adhesive composition may be performed using, for example, a method of heating the adhesive composition or a method of irradiating the adhesive composition with UV light or electron beam. The crosslinking density or gel fraction of the adhesive can be adjusted by adjusting the conditions in the method for forming the adhesive (e.g., heating temperature or UV or electron beam irradiation intensity).

The adhesive composition contains an acrylic copolymer.

The acrylic copolymer includes a structural unit derived from an alkyl (meth)acrylate.

The "(meth)acrylate" herein means acrylate or methacrylate.

The structural unit derived from an alkyl (meth)acrylate may include a structural unit derived from an alkyl (meth) acrylate containing an alcohol-derived C7 or higher alkyl group. The upper limit of the number of carbon atoms of the alkyl group in the structural unit derived from an alkyl (meth)acrylate containing an alcohol-derived C7 or higher alkyl group is preferably 15.

The "alcohol-derived alkyl group" herein refers to an alkyl group bound to an oxygen atom of an ester bond in the alkyl (meth)acrylate. The alcohol-derived alkyl group is preferably linear or branched.

Examples of the alkyl (meth)acrylate containing an alcohol-derived C7 or higher alkyl group include isoheptyl (meth)acrylate, n-heptyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, n-tridecyl (meth)acrylate, n-tetradecyl (meth)acrylate, pentadecyl (meth)acrylate, hexadecyl (meth)acrylate, heptadecyl (meth)acrylate, stearyl (meth)acrylate, and isostearyl (meth)acrylate. Preferred among these are 2-ethylhexyl (meth) acrylate, n-octyl (meth)acrylate, isooctyl (meth)acrylate, and n-heptyl (meth)acrylate, as they further improve the adhesion to polyolefin resins such as polypropylene.

Each of these alkyl (meth)acrylates may be used alone, or two or more of them may be used in combination.

The lower limit of the proportion of the structural unit derived from an alkyl (meth)acrylate containing an alcohol-derived C7 or higher alkyl group in the acrylic copolymer is preferably 5% by mass, and the upper limit thereof is preferably 90% by mass. When the proportion of the structural unit derived from an alkyl (meth)acrylate containing an alcohol-derived C7 or higher alkyl group is in the range, the compatibility with polyolefin resins can be further improved. The lower limit of the proportion of the structural unit derived from an alkyl (meth)acrylate containing an alcohol-derived C7 or higher alkyl group is more preferably 30% by mass, and the upper limit thereof is more preferably 75% by mass.

The structural unit derived from an alkyl (meth)acrylate may include a structural unit derived from an alkyl (meth) acrylate containing an alcohol-derived C5 or C6 alkyl group.

Examples of the alkyl (meth)acrylate containing an alcohol-derived C5 alkyl group include n-pentyl (meth) acrylate and isopentyl (meth)acrylate.

Examples of the alkyl (meth)acrylate containing an alcohol-derived C6 alkyl group include n-hexyl (meth)acrylate and isohexyl (meth)acrylate.

The lower limit of the proportion of the structural unit derived from an alkyl (meth)acrylate in the acrylic copolymer is preferably 20% by mass, and the upper limit thereof is preferably 90% by mass. When the proportion of the structural unit derived from an alkyl (meth)acrylate is 20% by mass or more, the adhesive composition can easily maintain the performance as adhesive. Moreover, the polymerization reaction in the production can proceed efficiently. When the proportion of the structural unit derived from an alkyl (meth)acrylate is 90% by mass or less, it is easy to maintain the quality of the polyolefin resin obtained by recycling with a polyolefin resin. The lower limit of the proportion of the structural unit derived from an alkyl (meth)acrylate is more preferably 30% by mass, and the upper limit thereof is more preferably 85% by mass. The lower limit is still more preferably 40% by mass, and the upper limit is still more preferably 80% by mass.

The acrylic copolymer includes a structural unit derived from an olefin polymer having a polymerizable unsaturated double bond at an end. When the acrylic copolymer includes a structural unit derived from an olefin polymer having a polymerizable unsaturated double bond at an end, in the adhesive formed from the adhesive composition, the structural units derived from an olefin polymer having a polymerizable unsaturated double bond at an end, which are present in the side chains of the acrylic copolymer, interact with each other and thereby cohere, forming pseudo-crosslinking points between molecules. With the acrylic copolymer having such a structure, the adhesive under low strain can exhibit a hard nature like a crosslinked adhesive and improved holding performance. In contrast, under high strain due to peel stress, the adhesive of the present invention exhibits a highly flexible nature and improved adhesion because the pseudo-crosslinking break and the molecules of the acrylic copolymer stretch. In other words, when the acrylic copolymer includes the structural unit derived from an olefin polymer having a polymerizable unsaturated double bond at an end, the adhesive can have improved holding performance and further improved adhesion. The adhesive member thus can more closely adhere to the adherend member. This can prevent peeling of the adhesive member from the adherend member in cutting or shredding the composite structure of the present invention in the recycling step, leading to improved handleability. As a result, the composite structure of the present invention can be recycled without separation more easily.

Moreover, the structural unit derived from an olefin polymer having a polymerizable unsaturated double bond at an end has low polarity, which improves the compatibility of the acrylic copolymer with polyolefin resins such as polypropylene. Thus, the polyolefin resin molded article obtained by recycling the adhesive and a polyolefin such as polypropylene without separation can have higher quality. As a result, the composite structure of the present invention can be recycled without separation. Moreover, the improvement of the compatibility with polyolefin resins such as polypropylene improves the wetting ability of the acrylic copolymer. As a result, the adhesive can have better holding performance for polyolefin resins such as polypropylene or adherends containing polyolefin resins.

The olefin polymer having a polymerizable unsaturated double bond at an end may have a polymerizable unsaturated double bond at one end or may have polymerizable unsaturated double bonds at both ends. Preferred is an olefin polymer having a polymerizable unsaturated double bond at one end because such an olefin copolymer facilitates the formation of a moderate number of pseudo-crosslinking points.

Examples of the olefin polymer having a polymerizable unsaturated double bond at an end include ethylene-butylene copolymers, ethylene-propylene copolymers, ethylene polymers, propylene polymers, and butylene polymers that have at one or both ends a group having a polymerizable unsaturated double bond.

Each of these olefin polymers having a polymerizable unsaturated double bond at an end may be used alone, or two or more of them may be used in combination.

Examples of the group having the polymerizable unsaturated double bond include a (meth)acryloyl group, a vinyl ether group, and a styryl group. Preferred among these is a (meth)acryloyl group because it has good copolymerizability with the alkyl (meth)acrylates.

The term "(meth)acryloyl" herein means acryloyl or methacryloyl.

Examples of the olefin polymer having a (meth)acryloyl group at an end include ethylene macromonomers having a (meth)acryloyl group at one end, propylene macromonomers having a (meth)acryloyl group at one end, ethylene-butylene macromonomers having a (meth)acryloyl group at one end, and ethylene-propylene macromonomers having a (meth)acryloyl group at one end. Preferred among these are ethylene-butylene macromonomers having a (meth)acryloyl group at one end and ethylene-propylene macromonomers having a (meth)acryloyl group at one end, because these macromonomers make it easy to satisfy the later-described glass transition temperature, leading to further improved adhesion of the adhesive of the present invention.

The "macromonomer" herein refers to a monomer having a weight average molecular weight of about 1,000 to 100,000 and having a polymerizable functional group.

The lower limit of the proportion of the structural unit derived from an olefin polymer having a polymerizable unsaturated double bond at an end in the acrylic copolymer is preferably 5% by mass. When the proportion of the structural unit derived from an olefin polymer having a polymerizable unsaturated double bond at an end is 5% by mass or more, the acrylic copolymer can have further improved compatibility with polyolefin resins such as polypropylene. As a result, the polyolefin resin molded article obtained by recycling the adhesive and a polyolefin resin such as polypropylene without separation can have higher quality. As a result, the composite structure of the present invention can be recycled without separation more easily. In addition, the acrylic copolymer forms a moderate number of pseudo-crosslinking points, which can further improve the adhesion and holding performance of the adhesive. Moreover, the adhesive can have improved wetting ability owing to a decrease in interfacial free energy between the adhesive and polyolefin resins such as polypropylene. As a result, the adhesive can have better holding performance for polyolefin resins such as polypropylene or adherends containing polyolefin resins. The lower limit of the proportion of the structural unit derived from an olefin polymer having a polymerizable unsaturated double bond at an end is more preferably 10% by mass, still more preferably 20% by mass.

The upper limit of the proportion of the structural unit derived from an olefin polymer having a polymerizable unsaturated double bond at an end is preferably 50% by mass. When the proportion of the structural unit derived from an olefin polymer having a polymerizable unsaturated double bond at an end is 50% by mass or less, cohesive failure of the adhesive can be further reduced. The upper limit of the proportion of the structural unit derived from an olefin polymer having a polymerizable unsaturated double bond at an end is preferably 45% by mass, more preferably 40% by mass.

The acrylic copolymer preferably includes a structural unit derived from a monomer containing a polar functional group. When the acrylic copolymer includes a structural unit derived from a monomer containing a polar functional group, the acrylic copolymer can have high polarity, which increases the cohesion of the adhesive and thus further improves the holding performance at high temperature. In the case that the adhesive of the present invention contains the later-described crosslinking agent, the acrylic copolymer forms a crosslinked structure via the crosslinking agent, further improving the adhesion and holding performance of the adhesive of the present invention.

Examples of the monomer containing a polar functional group include a carboxy group-containing monomer, a hydroxy group-containing monomer, an amide group-containing monomer, and an amino group-containing monomer. In particular, to further improve the adhesion and holding performance of the adhesive of the present invention, the monomer containing a polar functional group preferably includes at least one selected from the group consisting of a carboxy group-containing monomer and a hydroxy group-containing monomer, more preferably a hydroxy group-containing monomer. In other words, the structural unit derived from a monomer containing a polar functional group preferably includes at least one selected from the group consisting of a structural unit derived from a carboxy group-containing monomer and a structural unit derived from a hydroxy group-containing monomer, more preferably a structural unit derived from a hydroxy group-containing monomer.

Each of these monomers containing a polar functional group may be used alone, or two or more of these may be used in combination.

Examples of the carboxy group-containing monomer include unsaturated carboxylic acids such as (meth)acrylic acid, (meth)acryloylacetic acid, (meth)acryloylpropionic acid, (meth)acryloylbutyric acid, (meth)acryloylpentanoic acid, crotonic acid, maleic acid, fumaric acid, citraconic acid, mesaconic acid, itaconic acid, and 2-carboxyethyl (meth)acrylate.

Examples of the hydroxy group-containing monomer include 4-hydroxybutyl (meth)acrylate and 2-hydroxyethyl (meth)acrylate.

Examples of the amide group-containing monomer include N-vinyl-2-pyrrolidone, N-vinylcaprolactam, (meth)acrylamide, N,N-dimethyl(meth)acrylamide, and N-isopropyl(meth)acrylamide.

Examples of the amino group-containing monomer include (meth)acryloylmorpholine, 2-dimethylaminoethyl (meth)acrylate, and 2-diethylaminoethyl (meth)acrylate.

The lower limit of the proportion of the structural unit derived from a hydroxy group-containing monomer in the acrylic copolymer is preferably 0.01% by mass, and the upper limit thereof is preferably 6% by mass. When the proportion of the structural unit derived from a hydroxy group-containing monomer is 0.01% by mass or more, the crosslinking in the acrylic copolymer via the crosslinking agent more easily occurs, and the adhesion and holding performance of the adhesive can be further improved. When the proportion of the structural unit derived from a hydroxy group-containing monomer is 6% by mass or less, the adhesive is not excessively hard and can have further improved adhesion. The lower limit of the proportion of the structural unit derived from a hydroxy group-containing monomer is more preferably 0.03% by mass, still more preferably 0.05% by mass, and the upper limit is more preferably 3% by mass.

The lower limit of the proportion of the structural unit derived from a carboxy group-containing monomer in the acrylic copolymer is preferably 0.1% by mass, and the upper limit thereof is preferably 8% by mass. When the proportion of the structural unit derived from a carboxy group-containing monomer is 0.1 % by mass or more, the cohesion of the adhesive can be further improved, and the adhesion and holding performance can be further improved. When the proportion of the structural unit derived from a carboxy group-containing monomer is 8% by mass or less, the adhesive is not excessively hard and can have a good balance between adhesion and holding performance. The lower limit of the proportion of the structural unit derived from a carboxy group-containing monomer is more preferably 0.3% by mass, and the upper limit thereof is more preferably 6% by mass, still more preferably 5% by mass, further more preferably 2.5% by mass.

From the standpoint of the compatibility with polyolefin resins, the acrylic copolymer may not contain the structural unit derived from a carboxy group-containing monomer.

The lower limit of the total proportion of the structural unit derived from a monomer containing a polar functional group in the acrylic copolymer is preferably 0.1% by mass, and the upper limit thereof is preferably 10% by mass. When the total proportion of the structural unit derived from a monomer containing a polar functional group is 0.1% by mass or more, the acrylic copolymer can have higher polarity, which increases the cohesion of the adhesive and thus further improves the holding performance at high temperature. Moreover, the polymerization rection is more likely to proceed well. When the total proportion of the structural unit derived from a monomer containing a polar functional group is 10% by mass or less, the adhesive is not excessively hard and can have sufficient initial adhesion. The lower limit of the proportion of the structural unit derived from a monomer containing a polar functional group is more preferably 1% by mass, still more preferably 3% by mass, and the upper limit is more preferably 8% by mass.

The acrylic copolymer preferably has the following features: the structural unit derived from an alkyl (meth)acrylate includes a structural unit derived from an alkyl (meth)acrylate containing an alcohol-derived C7 or higher alkyl group, and the proportion of the structural unit derived from an alkyl (meth)acrylate containing an alcohol-derived C7 or higher alkyl group in the acrylic copolymer is 5% by mass or more and 90% by mass or less; the structural unit derived from a monomer containing a polar functional group includes no structural unit derived from a carboxy group-containing monomer, or the structural unit derived from a monomer containing a polar functional group includes the structural unit derived from a carboxy group-containing monomer and the proportion of the structural unit derived from a carboxy group-containing monomer in the acrylic copolymer is 5% by mass or less; and the proportion of the structural unit derived from a hydroxy group-containing monomer in the acrylic copolymer is 0.01% by mass or more. When the acrylic copolymer has such features, moderately flexible chemical crosslinks can be introduced.

It suffices that the acrylic copolymer includes the structural unit derived from an alkyl (meth)acrylate, the structural unit derived from an olefin polymer having a polymerizable unsaturated double bond at an end, and the structural unit derived from a monomer containing a polar functional group, but the acrylic copolymer may include a structural unit derived from a different monomer other than these structural units.

The lower limit of the weight average molecular weight (Mw) of the acrylic copolymer is preferably 500,000, and the upper limit thereof is preferably 2,000,000. When the weight average molecular weight of the acrylic copolymer is 500,000 or greater, the cohesion of the adhesive can be increased, and the holding performance at high temperature can be further improved. When the weight average molecular weight of the acrylic copolymer is 2,000,000 or less, the adhesive is not excessively hard, and the initial adhesion can be further improved. The lower limit of the weight average molecular weight of the acrylic copolymer is more preferably 550,000, and the upper limit thereof is more preferably 1,500,000. The lower limit is still more preferably 800,000, and the upper limit is still more preferably 1,200,000.

The lower limit of the ratio of the weight average molecular weight (Mw) to the number average molecular weight (Mn) (polydispersity: Mw/Mn) of the acrylic copolymer is preferably 1.0, and the upper limit thereof is preferably 10.0. When the polydispersity of the acrylic copolymer is in the range, the adhesion and holding performance of the adhesive of the present invention can be further improved. The lower limit of the polydispersity of the acrylic copolymer is more preferably 1.5, and the upper limit thereof is more preferably 9.0. The lower limit is still more preferably 2.0, and the upper limit is still more preferably 8.0.

The weight average molecular weight (Mw) and the number average molecular weight (Mn) herein refer to the weight average molecular weight in terms of standard polystyrene measured by gel permeation chromatography (GPC). Specifically, the acrylic copolymer is diluted to 0.1% by mass with tetrahydrofuran (THF). The diluted solution is passed through a filter (material: polytetrafluoroethylene, pore size: 0.2 $\mu$m). The obtained filtrate is fed to a gel permeation chromatograph (e.g., 2690 Separations Module, available from Waters Corporation) and subjected to GPC measurement at a sample flow rate of 1 mL/min and a column temperature of 40°C to measure the molecular weight of the acrylic copolymer in terms of polystyrene, and the weight average molecular weight (Mw) and the number average molecular weight (Mn) are determined. The column may be GPC KF-806L (available from Showa Denko K.K.), for example. The detector may be a differential refractometer, for example. From the obtained weight average molecular weight (Mw) and the number average molecular weight (Mn), the polydispersity (Mw/Mn) can be obtained.

The weight average molecular weight of the acrylic copolymer can be adjusted by, for example, a method of changing the polymerization initiator or the monomer concentration in the polymerization reaction, a method of adding a small amount of a chain transfer agent, such as dodecyl mercaptan, or a method of changing the type of a polymerization reaction solvent and thereby controlling the chain transfer to the solvent.

The glass transition temperature (Tg) of the acrylic copolymer is preferably in the range of -100°C or higher and 200°C or lower. The upper limit thereof is more preferably -20°C. When the glass transition temperature of the acrylic copolymer is - 20°C or lower, the molecules of the acrylic copolymer more easily stretch, which can further improve the adhesion of the adhesive of the present invention. The upper limit of the glass transition temperature of the acrylic copolymer is still more preferably - 25°C, further more preferably -30°C. In the case that the acrylic copolymer has multiple glass transition temperatures, more preferably, all the glass transition temperatures are -20°C or lower. In the case that the adhesive of the present invention contains a plurality of the acrylic copolymers, more preferably, all the acrylic copolymers have a glass transition temperature of -20°C or lower.

The glass transition temperature herein can be measured by differential scanning calorimetry. Specifically, the glass transition temperature of the acrylic copolymer can be measured using, for example, a differential scanning calorimeter (e.g., 220C, available from Seiko Instruments Inc.) in a nitrogen atmosphere (nitrogen flow, flow rate 50 mL/min) by a method in conformity with JIS K6240:2011 at a measurement temperature from -100°C to 200°C and a temperature increase rate of 10°C/min.

The glass transition temperature of the acrylic copolymer can be adjusted by adjusting the types or amounts of the monomers as the raw materials of the acrylic copolymer.

The lower limit of the proportion of the acrylic copolymer in the adhesive of the present invention is preferably 40% by mass. When the proportion of the acrylic copolymer is 40% by mass or more, the adhesion of the adhesive of the present invention can be further improved. The lower limit of the proportion of the acrylic copolymer is more preferably 50% by mass, still more preferably 55% by mass.

The proportion of the acrylic copolymer may be 100% by mass, but the upper limit of the proportion is preferably 90% by mass, more preferably 80% by mass, still more preferably 70% by mass.

The acrylic copolymer can be synthesized using a conventionally known polymerization method that involves radical reaction of a monomer mixture as a raw material in the presence of a polymerization initiator. Examples of the method include solution polymerization (boiling point polymerization or constant temperature polymerization), emulsion polymerization, suspension polymerization, and bulk polymerization. Preferred among these is solution polymerization because it enables easy synthesis.

In the case that the polymerization method is solution polymerization, examples of the reaction solvent include ethyl acetate, toluene, methyl ethyl ketone, methylsulfoxide, ethanol, acetone, diethyl ether, and cyclohexane. Each of these reaction solvents may be used alone, or two or more of these may be used in combination.

Examples of the polymerization initiator include organic peroxides and azo compounds.

Examples of the organic peroxides include 1,1-bis(t-hexylperoxy)-3,3,5-trimethylcyclohexane, t-hexyl peroxypivalate, t-butyl peroxypivalate, 2,5-dimethyl-2,5-bis(2-ethylhexanoylperoxy)hexane, t-hexyl peroxy-2-ethylhexanoate, t-butyl peroxy-2-ethylhexanoate, t-butyl peroxyisobutyrate, t-butyl peroxy-3,5,5-trimethylhexanoate, and t-butyl peroxylaurate.

Examples of the azo compounds include azobisisobutyronitrile and azobiscyclohexanecarbonitrile.

Each of these polymerization initiators may be used alone, or two or more of these may be used in combination.

The adhesive of the present invention preferably satisfies at least one feature selected from the group consisting of the following first feature, second feature, and third feature.

First feature: (1) the structural unit derived from an alkyl (meth)acrylate includes no structural unit derived from an alkyl (meth)acrylate containing an alcohol-derived C1-C4 alkyl group, or the structural unit derived from an alkyl (meth)acrylate includes a structural unit derived from an alkyl (meth)acrylate containing an alcohol-derived C1-C4 alkyl group and the proportion of the structural unit derived from an alkyl (meth)acrylate containing an alcohol-derived C1-C4 alkyl group in the acrylic copolymer is 30% by mass or less, and (2) the adhesive has a gel fraction of 10% by mass or more and 90% by mass or less.

Second feature: (1) the structural unit derived from an alkyl (meth)acrylate includes a structural unit derived from an alkyl (meth)acrylate containing an alcohol-derived C1-C4 alkyl group, and the proportion of the structural unit derived from an alkyl (meth)acrylate containing an alcohol-derived C1-C4 alkyl group in the acrylic copolymer is more than 10% by mass and 60% by mass or less, and (2) the adhesive has a gel fraction of 55% by mass or less.

Third feature: (1) the acrylic copolymer has an SP value of 9.30 $(cal/cm^3)^{1/2}$ or greater and 9.95 $(cal/cm^3)^{1/2}$ or less, and (2) the adhesive has a gel fraction of 10% by mass or more and 55% by mass or less.

When the adhesive of the present invention satisfies at least one feature selected from the group consisting of the first feature, the second feature, and the third feature, the adhesive member can have better holding performance at high temperature and better adhesion, and can have excellent holding performance for polyolefin resins such as polypropylene or adherends containing polyolefin resins. The adhesive member thus can more closely adhere to the adherend member. This can prevent peeling of the adhesive member from the adherend member in cutting or shredding the composite structure of the present invention in the recycling step, leading to improved handleability. As a result, the composite structure of the present invention can be recycled without separation more easily.

In the first feature, the structural unit derived from an alkyl (meth)acrylate includes no structural unit derived from an alkyl (meth)acrylate containing an alcohol-derived C1-C4 alkyl group, or the structural unit derived from an alkyl (meth)acrylate includes a structural unit derived from an alkyl (meth)acrylate containing an alcohol-derived C1-C4 alkyl group, and the upper limit of the proportion of the structural unit derived from an alkyl (meth)acrylate containing an alcohol-derived C1-C4 alkyl group in the acrylic copolymer is preferably 30% by mass. When the proportion of the structural unit derived from an alkyl (meth)acrylate containing an alcohol-derived C1-C4 alkyl group is 30% or less, the polyolefin resin molded article obtained by recycling the adhesive and a polyolefin resin such as polypropylene without separation can have higher quality, thus making it easier to recycle the composite structure of the present invention without separation. The adhesive can have improved wetting ability owing to a decrease in interfacial free energy between the adhesive and polyolefin resins such as polypropylene. As a result, the adhesive member can have better holding performance at high temperature for polyolefin resins such as polypropylene or adherends containing polyolefin resins. In the case that the structural unit derived from an alkyl (meth)acrylate includes the structural unit derived from an alkyl (meth)acrylate containing an alcohol-derived C1-C4 alkyl group, the upper limit of the proportion of the structural unit derived from an alkyl (meth)acrylate containing an alcohol-derived C1-C4 alkyl group is preferably 27% by mass, more preferably 20% by mass.

In the first feature, in the case that the structural unit derived from an alkyl (meth)acrylate includes the structural unit derived from an alkyl (meth)acrylate containing an alcohol-derived C1-C4 alkyl group, the lower limit of the proportion of the structural unit derived from an alkyl (meth)acrylate containing an alcohol-derived C1-C4 alkyl group is preferably 5% by mass, more preferably 10% by mass.

In the first feature, examples of the alkyl (meth)acrylate containing an alcohol-derived C1-C4 alkyl group include alkyl (meth)acrylates obtained by dehydration-condensation of (meth)acrylic acid with an alcohol containing a linear or branched C1-C4 alkyl group. Specific examples include methyl (meth)acrylate, ethyl (meth)acrylate, n-butyl (meth)acrylate, s-butyl (meth)acrylate, t-butyl (meth)acrylate, and isobutyl (meth)acrylate. From the standpoint of further improving the polarity of the acrylic copolymer, methyl (meth)acrylate is preferred. From the standpoint of further improving the compatibility of the acrylic copolymer with polyolefin resins such as polypropylene, butyl (meth)acrylate is preferred.

Each of these alkyl (meth)acrylates may be used alone, or two or more of them may be used in combination.

In the first feature, the lower limit of the gel fraction of the adhesive is preferably 10% by mass, and the upper limit thereof is preferably 90% by mass. In the first feature, when the gel fraction of the adhesive is 10% by mass or more, the adhesive can have excellent cohesion, and the adhesive member can have further improved holding performance at high temperature. When the gel fraction of the adhesive is 90% by mass or less, the compatibility with polyolefin resins such as polypropylene can be improved. Moreover, the adhesive is not excessively hard, and the adhesive member can have sufficient initial adhesion. The lower limit of the gel fraction of the adhesive is more preferably 20% by mass, and the upper limit thereof is more preferably 85% by mass. The lower limit is still more preferably 25% by mass, and the upper limit is still more preferably 80% by mass. The lower limit is further more preferably 40% by mass, and the upper limit is further more preferably 70% by mass.

The gel fraction herein is measured using the following method, for example.

Specifically, $W_0$ (g) of the adhesive is sampled, immersed in 50 mL of tetrahydrofuran (THF), and shaken with a shaker at 23°C at 200 rpm for 24 hours. After shaking, THF is separated from the adhesive swollen with THF by filtration using a metal mesh (opening #200 mesh, mass: $W_1$ (g)). The adhesive swollen with THF is dried at 110°C for one hour, and then the mass $W_2$ (g) of the adhesive including metal mesh is measured. The gel fraction is calculated using the following equation (1).

$$\text{Gel fraction (\% by mass)} = 100 \times (W_2 - W_1)/W_0 \quad (1)$$

($W_0$: initial mass of adhesive, $W_1$: mass of metal mesh, $W_2$: mass of adhesive after drying (including metal mesh))

In the first feature, the gel fraction of the adhesive can be adjusted to the range described above by, for example, methods including, but not limited to, a method of changing the type or amount of the crosslinking agent to be contained in the adhesive composition, and a method of adjusting the electron beam or UV irradiation intensity or irradiation time in the case of performing electron beam or UV irradiation for forming the adhesive.

In the first feature, the adhesive composition preferably further contains a crosslinking agent. When the adhesive composition contains a crosslinking agent, the acrylic copolymer forms a crosslinked structure via the crosslinking agent. This increases the gel fraction of the adhesive, making it easier to adjust the gel fraction to the range described above. As a result, the holding performance of the adhesive member at high temperature can be further improved.

In the first feature, examples of the crosslinking agent include epoxy crosslinking agents and isocyanate crosslinking agents. Preferred among these are isocyanate crosslinking agents because they make it easier to adjust the gel fraction of the adhesive to the range described above.

In the first feature, the lower limit of the amount of the crosslinking agent is preferably 0.01 parts by mass, and the upper limit thereof is preferably 10 parts by mass, relative to 100 parts by mass of the acrylic copolymer. When the amount of the crosslinking agent is in the range, the gel fraction of the adhesive can be easily adjusted to the range described above, and the holding performance of the adhesive member at high temperature can be further improved. The lower limit of the amount of the crosslinking agent is more preferably 0.1 parts by mass, and the upper limit thereof is more preferably 2 parts by mass.

In the second feature, the structural unit derived from an alkyl (meth)acrylate includes a structural unit derived from an alkyl (meth)acrylate containing an alcohol-derived C1-C4 alkyl group. When the structural unit derived from an alkyl (meth)acrylate includes a structural unit derived from an alkyl (meth)acrylate containing an alcohol-derived C1-C4 alkyl group, the acrylic copolymer can have higher polarity, which increases the cohesion of the adhesive, leading to improved holding performance of the adhesive member at high temperature.

In the second feature, the proportion of the structural unit derived from an alkyl (meth)acrylate containing an alcohol-derived C1-C4 alkyl group in the acrylic copolymer is preferably more than 10% by mass and 60% by mass or less. In the second feature, when the proportion of the structural unit derived from an alkyl (meth)acrylate containing an alcohol-derived C1-C4 alkyl group is more than 10% by mass, the acrylic copolymer can have higher polarity, which increases the cohesion of the adhesive and thus further improves the holding performance of the adhesive member at high temperature. In the second feature, when the proportion of the structural unit derived from an alkyl (meth)acrylate containing an alcohol-derived C1-C4 alkyl group is 60% by mass or less, the adhesive can have improved wetting ability owing to a decrease in interfacial free energy between the adhesive and polyolefin resins such as polypropylene. As a result, the adhesive member can have better holding performance for polyolefin resins such as polypropylene or adherends containing polyolefin resins. Moreover, the polyolefin resin molded article obtained by recycling the adhesive of the present invention and a polyolefin resin such as polypropylene without separation can have higher quality, making it more preferable to recycle the composite structure of the present invention and a polyolefin resin such as polypropylene without separation. The lower limit of the proportion of the structural unit derived from an alkyl (meth)acrylate containing an alcohol-derived C1-C4 alkyl group is more preferably 14% by mass, and the upper limit thereof is more preferably 56% by mass. The lower limit is still more preferably 20% by mass, and the upper limit is still more preferably 50% by mass.

In the second feature, examples of the alkyl (meth)acrylate containing an alcohol-derived C1-C4 alkyl group includes the same alkyl (meth)acrylates as those in the first feature described above.

In the second feature, the gel fraction of the adhesive is 55% by mass or less. In the second feature, when the gel fraction of the adhesive is 55% by mass or less, the compatibility with polyolefin resins such as polypropylene can be improved. The gel fraction of the adhesive is preferably 45% by mass or less (particularly less than 45% by mass), more preferably 30% by mass or less (particularly less than 30% by mass), most preferably 10% by mass or less (particularly less than 10% by mass).

In the second feature, the less the gel fraction of the adhesive, the better. The lower limit of the gel fraction of the adhesive is thus not limited as long as it is 0% by mass or more.

In the second feature, the gel fraction of the adhesive can be adjusted to the range described above by, for example, methods including, but not limited to, a method of changing the type or amount of the crosslinking agent to be contained in the adhesive composition, and a method of adjusting the electron beam or UV irradiation intensity or irradiation time in the case of performing electron beam or UV irradiation for forming the adhesive.

In the second feature, preferably, the adhesive composition contains no crosslinking agent, or contains a crosslinking agent in an amount of 1.5 parts by mass or less relative to 100 parts by mass of the acrylic copolymer. When the amount of the crosslinking agent is 1.5 parts by mass or less, the gel fraction of the adhesive can be more easily adjusted to the range described above. As a result, the adhesive member can have better holding performance for polyolefin resins such as polypropylene or adherends containing polyolefin resins, and the composite structure of the present invention can be recycled without separation into a product with excellent quality. In the second feature, in the case of containing the crosslinking agent, the upper limit of the amount of the crosslinking agent is more preferably 1.0 parts by mass, still more preferably 0.5 parts by mass, further more preferably 0.2 parts by mass. In the second feature, in the case of containing the crosslinking agent, the less the amount of crosslinking agent, the better. The lower limit of the amount is thus not limited but preferably more than 0 parts by mass.

In the second feature, examples of the crosslinking agent include the same crosslinking agents as those in the first feature described above.

In the first feature in the case that the structural unit derived from an alkyl (meth)acrylate includes no structural unit derived from an alkyl (meth)acrylate containing an alcohol-derived C1-C4 alkyl group, the acrylic copolymer includes any of the above-described structural units derived from an alkyl (meth)acrylate containing an alcohol-derived C5 or higher alkyl group as the structural unit derived from an alkyl (meth)acrylate.

In the first feature in the case that the structural unit derived from an alkyl (meth)acrylate includes the structural unit derived from an alkyl (meth)acrylate containing an alcohol-derived C1-C4 alkyl group, and in the second feature, the structural unit derived from an alkyl (meth)acrylate may include any of the above-described structural units derived from an alkyl (meth)acrylate containing an alcohol-derived C5 or higher alkyl group.

In the third feature, the lower limit of the gel fraction of the adhesive is preferably 10% by mass, and the upper limit thereof is preferably 55% by mass. In the third feature, when the gel fraction of the adhesive is 10% by mass or more, the adhesive can have excellent cohesion, and the adhesive member can have further improved holding performance at high temperature. In the third feature, when the gel fraction of the adhesive is 55% by mass or less, the compatibility with polyolefin resins such as polypropylene can be improved. When the gel fraction of the adhesive is 55% by mass or less, the adhesive is not excessively hard, and the adhesive member can have sufficient initial adhesion. The lower limit of the gel fraction of the adhesive is preferably 20% by mass, and the upper limit thereof is preferably 52% by mass. The lower limit is more preferably 30% by mass, and the upper limit is more preferably 50% by mass.

In the third feature, the gel fraction of the adhesive can be adjusted to the range described above by, for example, methods including, but not limited to, a method of changing the type or amount of the crosslinking agent to be contained in the adhesive composition, and a method of adjusting the electron beam or UV irradiation intensity or irradiation time in the case of performing electron beam or UV irradiation for forming the adhesive.

In the third feature, the adhesive composition preferably further contains a crosslinking agent. In the third feature, when the adhesive composition contains a crosslinking agent, the acrylic copolymer forms a crosslinked structure via the crosslinking agent. This increases the gel fraction of the adhesive, so that the gel fraction can be more easily adjusted to the range described above, and the holding performance of the adhesive member at high temperature can be further improved.

In the third feature, examples of the crosslinking agent include the same crosslinking agents as those in the first feature described above.

In the third feature, the lower limit of the amount of the crosslinking agent is preferably 0.01 parts by mass, and the upper limit thereof is preferably 1.5 parts by mass, relative to 100 parts by mass of the acrylic copolymer. In the third feature, when the amount of the crosslinking agent is in the range, the gel fraction of the adhesive can be easily adjusted to the range described above, and the holding performance at high temperature can be further improved. The lower limit of the amount of the crosslinking agent is more preferably 0.05 parts by mass, and the upper limit thereof is more preferably 1.0 parts by mass.

In the third feature, the lower limit of the SP value of the acrylic copolymer is 9.30 $(cal/cm^3)^{1/2}$, and the upper limit thereof is 9.95 $(cal/cm^3)^{1/2}$. When the SP value of the acrylic copolymer is in the range, the adhesive can have improved wetting ability owing to a decrease in interfacial free energy between the adhesive and polyolefin resins such as polypropylene. As a result, the adhesive member can have better holding performance for polyolefin resins such as polypropylene or adherends containing polyolefin resins. Moreover, the polyolefin resin molded article obtained by recycling the adhesive and a polyolefin resin such as polypropylene without separation can have excellent quality, so that the composite structure of the present invention can be recycled without separation more easily. The lower limit of the SP value of the acrylic copolymer is more preferably 9.36 $(cal/cm^3)^{1/2}$, and the upper limit thereof is more preferably 9.80 $(cal/cm^3)^{1/2}$. The lower limit is still more preferably 9.45 $(cal/cm^3)^{1/2}$, and the upper limit is still more preferably 9.70 $(cal/cm^3)^{1/2}$.

Herein the "SP value", also called solubility parameter, is an index of the ease of dissolution that is calculated using the Fedors method (R. F. Fedors, Polym. Eng. Sci., 14(2), 147-154(1974)) (unit = $(cal/cm^3)^{1/2}$). The SP value of the acrylic polymer can be calculated using a weighted average based on the SP value and proportion of each structural unit monomer contained in the acrylic polymer.

In the first feature or the second feature, the lower limit of the SP value of the acrylic copolymer is preferably 9.30 $(cal/cm^3)^{1/2}$, and the upper limit thereof is preferably 9.95 $(cal/cm^3)^{1/2}$. When the SP value of the acrylic copolymer is in the range, the adhesive can have improved wetting ability owing to a decrease in interfacial free energy between the adhesive and polyolefin resins such as polypropylene. As a result, the adhesive member can have better holding performance for polyolefin resins such as polypropylene or adherends containing polyolefin resins. Moreover, the polyolefin resin molded article obtained by recycling the adhesive and a polyolefin resin such as polypropylene without separation can have higher quality, so that the composite structure of the present invention can be recycled without separation more easily. The lower limit of the SP value of the acrylic copolymer is more preferably 9.36 $(cal/cm^3)^{1/2}$, and the upper limit thereof is more preferably 9.80 $(cal/cm^3)^{1/2}$. The lower limit is still more preferably 9.45 $(cal/cm^3)^{1/2}$, and the upper limit is still more preferably 9.70 $(cal/cm^3)^{1/2}$.

The SP value of the acrylic copolymer can be adjusted by, for example, adjusting the type or proportion of a monomer constituting the acrylic copolymer. Specifically, for example, the SP value of the acrylic copolymer can be increased by increasing the proportion of the structural unit derived from an alkyl (meth)acrylate containing an alcohol-derived C1-C4 alkyl group in the acrylic copolymer. For example, the SP value of the acrylic copolymer can be decreased by increasing the proportion of the structural unit derived from an alkyl (meth)acrylate containing an alcohol-derived C5 or higher alkyl group.

The adhesive composition may further contain a tackifier resin. When the adhesive composition contains a tackifier resin, the adhesion of the adhesive can be improved.

Examples of the tackifier resin include rosin resins, terpene resins, terpene phenol resins, aromatic modified-terpene resins, petroleum resins, and styrene resins. To ensure good wetting ability to adherends, the tackifier resin is preferably at least one selected from the group consisting of a rosin resin, a terpene resin, a terpene phenol resin, and a petroleum resin.

Each of these tackifier resins may be used alone, or two or more of them may be used in combination.

Examples of the rosin resins include Pensel D-135, Super Ester A-125, Pinecrystal KE359 (all available from Arakawa Chemical Industries Ltd.), Pentalyn C (available from Eastman Chemical Company), and SYLVALITE 2115 (available from Kraton).

Examples of the terpene resins include YS Resin PX1250, YS Resin PX1150, and YS Resin PX1000 (all available from Yasuhara Chemical Co., Ltd.) and SYLVARES 3125 (available from Kraton).

Example of the terpene phenol resins include YS Polyster G150, YS Polyster T160, YS Polyster T145, YS Polyster TH130, YS Polyster UH115, YS Polyster K125, and YS Polyster U130 (all available from Yasuhara Chemical Co., Ltd.) and SYLVARES 1150 and SYLVARES TP7042 (both available from Kraton). Examples of the aromatic modified-terpene resins include YS Polyster TO125 (available from Yasuhara Chemical Co., Ltd.)

Examples of the petroleum resins include Arkon P125 and Arkon P140 (available from Arakawa Chemical Industries Ltd.), Quintone RX110 (available from Zeon Corporation), Petcoal 130 (available from Tosoh Corporation), and Petrotack 100V (available from Tosoh Corporation).

Examples of the styrene resins include YS Resin SX100 (available from Yasuhara Chemical Co., Ltd.).

The upper limit of the amount of the tackifier resin relative to 100 parts by mass of the acrylic copolymer is preferably 40 parts by mass. When the amount of the tackifier resin is 40 parts by mass or less, the adhesive of the present invention can easily maintain the wetting ability to adherends. The amount of the tackifier resin is more preferably 30 parts by mass or less (particularly less than 30 parts by mass), still more preferably 20 parts by mass or less.

The lower limit of the amount of the tackifier resin may be 0 parts by mass but is preferably 5 parts by mass, more preferably 10 parts by mass, still more preferably 15 parts by mass, relative to 100 parts by mass of the acrylic copolymer.

The adhesive composition may contain conventionally known fine particles or additives such as inorganic fine particles, conductive fine particles, antioxidants, foaming agents, organic fillers, or inorganic fillers, if necessary.

The method for producing the adhesive of the present invention is not limited. The adhesive may be produced using a conventionally known method. For example, first, the alkyl (meth)acrylate, the olefin polymer having a polymerizable unsaturated double bond at an end, the monomer containing a polar functional group, and if necessary other monomer(s) are copolymerized using a conventional method to give the acrylic copolymer. Next, the obtained acrylic copolymer is mixed with the crosslinking agent, the tackifier resin, and/or other additive(s) if necessary, whereby the adhesive composition can be obtained. The obtained adhesive composition is sufficiently mixed by stirring, followed by heating, UV or electron beam irradiation, or the like, whereby an adhesive formed from the adhesive composition can be obtained.

The adhesive in the adhesive member may be a liquid adhesive or an adhesive of an adhesive tape including an adhesive layer. In other words, in the composite structure of the present invention, the adherend member may be bonded using a liquid adhesive or an adhesive tape. In particular, from the standpoint of processability, the adhesive member preferably includes an adhesive tape including an adhesive layer containing the adhesive.

The composite structure of the present invention may include one adhesive member or two or more types of adhesive members. When the composite structure includes two or more types of adhesive members, a liquid adhesive and an adhesive tape may be used in combination. When the composite structure includes two or more types of adhesive members, it suffices that at least one of the adhesive members includes the adhesive. Preferably, all the adhesive members include the adhesive.

When the adhesive member includes a liquid adhesive, the liquid adhesive may be applied in a layer or applied to a specific spot. In particular, from the standpoint of close adhesion to the adherend member, the liquid adhesive is preferably applied in a layer.

When the adhesive member includes the adhesive tape, the lower limit of the thickness of the adhesive layer of the adhesive tape is preferably 5 μm, and the upper limit thereof is preferably 75 μm. When the thickness of the adhesive layer is 5 μm or greater, the adhesive tape can have good adhesiveness to adherends, leading to further improved adhesion strength between the adhesive member and the adherend member. This can further reduce peeling of the adhesive member from the adherend member in recycling of the composite structure of the present invention. As a result, recycling of the composite structure of the present invention without separation can be more practical. When the thickness of the adhesive layer is 75 μm or less, the compatibility with polyolefin resins can be improved, making the recycling more practical. The lower limit of the thickness of the adhesive layer is more preferably 10 μm, and the upper limit thereof is more preferably 70 μm. The lower limit is still more preferably 20 μm, and the upper limit is still more preferably 65 μm.

The thickness herein can be measured using a dial thickness gauge (e.g., ABS Digimatic Indicator, available from Mitutoyo Corporation).

In the case that the adhesive member includes the adhesive tape, the adhesive tape may be a non-support adhesive tape including no substrate or a support adhesive tape including a substrate. In the case that the adhesive tape of the present invention is a non-support tape including no substrate, the composite structure of the present invention can be recycled without separation more easily. In the case that the adhesive tape is a support adhesive tape including a substrate, the adhesive tape can be more easily processed.

In the case that the adhesive tape includes a substrate, the adhesive tape may be a one-sided adhesive tape including an adhesive layer on one side of the substrate, or may be a double-sided adhesive tape including adhesive layers on both sides of the substrate.

In the case that the adhesive tape includes a substrate, the substrate preferably contains a polyolefin resin. When the substrate contains a polyolefin resin, the substrate can have better compatibility with the adherend member, making it easier to recycle the composite structure of the present invention without separation.

In the substrate, the lower limit of the proportion of the olefin-derived structural unit in the polyolefin resin is preferably 70% by mass. When the preferable lower limit of the proportion of the olefin-derived structural unit is 70% by mass, the substrate can have better compatibility with adherends containing polyolefin resins, making it easier to recycle the composite structure of the present invention without separation. The lower limit of the proportion of the olefin-derived structural unit is more preferably 80% by mass, still more preferably 90% by mass.

In the substrate, the higher the proportion of the olefin-derived structural unit in the polyolefin resin, the better. The proportion may be 100% by mass.

In the substrate, the polyolefin resin most preferably consists only of the olefin-derived structural unit.

Examples of the olefin-derived structural unit in the polyolefin resin in the substrate include a propylene-derived structural unit, an ethylene-derived structural unit, an isoprene-derived structural unit, a butadiene-derived structural unit, and a butylene-derived structural unit. In particular, to more easily recycle the substrate and an adherend containing a polyolefin resin without separation, the olefin-derived structural unit preferably includes a propylene-derived structural unit.

In the case that the polyolefin resin in the substrate includes a propylene-derived structural unit, the lower limit of the proportion of the propylene-derived structural unit in the polyolefin resin is preferably 50% by mass. When the proportion of the propylene-derived structural unit is 50% by mass or more, the substrate can have better compatibility with adherends containing polyolefin resins, making it easier to recycle the substrate or adherends containing polyolefin resins without separation. The lower limit of the proportion of the propylene-derived structural unit is more preferably 70% by mass, still more preferably 90% by mass.

The higher the proportion of the olefin-derived structural unit in the substrate, the better. The proportion may be 100% by mass.

In the substrate, examples of the polyolefin resin consisting only of the olefin-derived structural unit include polypropylene, polyethylene, polyisoprene, cycloolefins, cycloolefin copolymers, polybutadiene, and polybutylene. To more easily recycle the composite structure of the present invention without separation, the polyolefin resin preferably includes polypropylene.

The substrate may contain one resin or two or more resins. In the case that the substrate contains two or more resins, the polyolefin resin is preferably a main component among all the resins in the substrate. Here, being "a main component among all the resins in the substrate" refers to being contained in a proportion of 50% or more of all the resins contained in the substrate.

In the case that the substrate contains two or more resins and the proportion of the polyolefin resin is 50% by mass or more of the resins, the lower limit of the proportion of the polyolefin resin is more preferably 70% by mass, still more preferably 90% by mass. The higher the proportion of the polyolefin resin, the better. The upper limit of the proportion may be 100% by mass (i.e., all the resins contained in the substrate are polyolefin resins).

The substrate may contain at least one colorant selected from the group consisting of a pigment and a dye. Even when the substrate contains at least one colorant selected from the group consisting of a pigment and a dye, recycling of the composite structure of the present invention without separation can be performed without problems.

Examples of the substrate containing a colorant include PP Craft Film (available from Acrysunday Co., Ltd.).

The substrate may be in any form. From the standpoint of the handleability of the adhesive tape, the form of the substrate preferably includes at least one selected from the group consisting of a film, a sheet, a non-woven fabric, a foam, and a net.

Examples of the substrate containing 50% by mass or more of polyolefin resin include OPP films, biaxially oriented PE films, CPP films, olefin fiber non-woven fabrics, and olefin foams.

Examples of the OPP films include Pylen film P2261 (available from Toyobo Co., Ltd.) and Torayfan BO #60-2548 (available from Toray Industries Inc.).

Examples of the biaxially oriented PE films include BOPE film (available from Sinofilm Group Ltd.) and Torayfan NO (available from Toray Industries Inc.).

Examples of the CPP films include ET20 (available from Okamoto Industries, Inc.).

Examples of the olefin fiber non-woven fabrics include All Olefin Paper-20 (available from Nippon Paper Papylia Co., Ltd.).

Examples of the olefin foams include Softlon S, Lightlon #41, and WL006 (all available from Sekisui Chemical Co., Ltd.).

Examples of the net containing olefin resin include Conwed Net (available from ENEOS Techno Materials Corporation).

Examples of the substrate containing 50% by mass or more of polyolefin resin also include EVA films, cycloolefin copolymer films, cycloolefin polymer films, olefin resin-containing non-woven fabrics, and polypropylene craft films.

Examples of the EVA films include Suntec EF1522.1 (available from Asahi Kasei Corporation).

Examples of the cycloolefin copolymer films include F Film (available from Gunze Limited.)

Examples of the cycloolefin polymer films include Zenon Film (available from Zeon Corporation).

Examples of the olefin resin-containing non-woven fabrics include Splitop (available from Maedakosen Co., Ltd.).

Examples of the polypropylene craft films include PP Craft Film (available from Acrysunday Co., Ltd.).

At least one selected from the group consisting of a melting point and a glass transition temperature of the substrate is preferably 100°C or higher. When at least one selected from the group consisting of the melting point and the glass transition temperature of the substrate is 100°C or higher, the heat resistance of the adhesive member can be further improved.

More preferably, both the melting point and the glass transition temperature of the substrate are 100°C or higher. In the case that either the melting point or the glass transition temperature of the substate is not measurable, one of them that is measurable is preferably 100°C or higher.

In the case that the substrate has multiple melting points or multiple glass transition temperatures, preferably, at least one melting point or glass transition temperature is 100°C or higher, and more preferably, all the melting points or glass transition temperatures are 100°C or higher.

From the standpoints described above, the lower limit of the melting point of the substrate is preferably 100°C, more preferably 120°C, still more preferably 150°C.

From the standpoint of the ease of melting the composite structure of the present invention in recycling, the upper limit of the melting point of the substrate is preferably 200°C, more preferably 180°C.

The melting point of the substrate can be measured using the following method, for example.

Specifically, the substrate is subjected to differential scanning calorimetry (DSC) using a differential scanning calorimeter (e.g., DSC-7020, available from Hitachi High-Tech Science Corporation) in a nitrogen atmosphere at a temperature increase rate of 10°C/min and a measurement temperature from 30°C to 500°C. From the obtained differential scanning calorimetry curve, the endothermic peak is read, whereby the melting point of the substrate can be measured.

From the standpoints described above, the lower limit of the glass transition temperature of the substrate is preferably 100°C, more preferably 120°C, still more preferably 150°C.

From the standpoint of the ease of melting the composite structure of the present invention in recycling, the upper limit of the glass transition temperature of the substrate is preferably 200°C, more preferably 180°C, and still more preferably 150°C.

The glass transition temperature of the substrate can be measured using the following method, for example.

Specifically, the substrate is subjected to differential scanning calorimetry (DSC) using a differential scanning calorimeter (e.g., DSC-7020, available from Hitachi High-Tech Science Corporation) in a nitrogen atmosphere at a temperature increase rate of 10°C/min and a measurement temperature from -50°C to 300°C. From the obtained differential scanning calorimetry curve, the midpoint of the shift is read, whereby the glass transition temperature of the substrate can be measured.

The upper limit of the gel fraction of the substrate is preferably 10% by mass. When the gel fraction of the substrate is 10% by mass or less, the composite structure of the present invention can be recycled without separation more easily. The upper limit of the gel fraction of the substrate is more preferably 5% by mass, still more preferably 0% by mass.

The gel fraction of the substrate can be measured using the following method, for example.

Specifically, $W_3$ (g) of the substrate is immersed in 50 mL of xylene and shaken with a shaker at 115°C at 200 rpm for 24 hours. After shaking, xylene is separated from the substrate swollen with xylene by filtration using a metal mesh (opening #200 mesh). The substrate swollen with xylene is vacuum-dried, and then the mass $W_4$ (g) of the substrate is measured. The gel fraction is calculated using the following equation (2).

$$\text{Gel fraction (\% by mass)} = 100 \times W_4/W_3 \quad (2)$$

($W_3$: initial mass of substrate, $W_4$: mass of substrate after drying)

The lower limit of the thickness of the substrate is preferably 1 $\mu$m. When the thickness of the substrate is 1 $\mu$m or greater, the adhesive tape can have good processability. The lower limit of the thickness of the substrate is more preferably 5 $\mu$m, still more preferably 10 $\mu$m.

The upper limit of the thickness of the substrate is preferably 500 $\mu$m. When the substrate is 500 $\mu$m or less, the adhesive tape can have good processability. Moreover, the adhesive tape and the composite structure of the present invention can be recycled without separation more easily. The upper limit of the thickness of the substrate is more preferably 300 $\mu$m, still more preferably 200 $\mu$m.

The adhesive tape may further contain a different layer as long as the effects of the present invention are not impaired.

The adhesive tape including no substrate can be produced by, for example, applying a solution of the adhesive composition obtained by the above-described method to the release-treated side of a release film, followed by drying and/or other treatment to form an adhesive layer. The adhesive tape produced by the above-described method may be used as an adhesive layer and bonded to a substrate to provide an adhesive tape including the substrate.

The adhesive tape of the present invention can also be produced by, for example, sufficiently mixing the solution of the adhesive composition obtained by the above-described method, applying the solution to the release-treated side of a release film, performing treatment such as heating or UV or electron beam irradiation, followed by drying to form an adhesive layer containing an adhesive formed from the adhesive composition.

In the case that the adhesive member includes the adhesive tape, the lower limit of the 180° peel force at 23°C of the adhesive tape for a polypropylene plate is preferably 1.0 N/25 mm. When the 180° peel force at 23°C of the adhesive tape for the polypropylene plate is 1.0 N/25 mm or greater, the adhesive member can more closely adhere to the adherend member. This can prevent peeling of the adhesive member from the adherend member in cutting or shredding the composite structure of the present invention in the recycling step, leading to improved handleability. As a result, the composite structure of the present invention can be recycled without separation more easily. The lower limit of the 180° peel force at 23°C of the adhesive tape for the polypropylene plate is more preferably 1.5 N/25 mm, still more preferably 1.8 N/25 mm, further more preferably 5.0 N/25 mm, particularly preferably 7.0 N/25 mm, especially preferably 9.0 N/25 mm.

The 180° peel force at 23°C of the adhesive tape for the polypropylene plate can be measured using the following method, for example.

Specifically, first, the adhesive tape of the present invention is cut to 25 mm in width × 100 mm in length to prepare a specimen. The obtained specimen is bonded to a polypropylene plate (e.g., RPP 1350, available from C.I. TAKIRON Corporation) by moving a 2-kg rubber roller back and forth once thereon at a speed of 300 mm/min, whereby a measurement sample is prepared. The obtained measurement sample is subjected to a 180° peel test in conformity with JIS Z0237 using a tensile tester (e.g., RTI-1310, available from A&D Company, Ltd.) at 23°C, 50% RH, and a peel rate of 300 mm/min. The adhesive tape is peeled off from the polypropylene plate, whereby the 180° peel force can be measured.

In the case of the double-sided adhesive tape, the adhesive layer on one side (the side not to be measured) is bonded to a 23-$\mu$m-thick polyethylene terephthalate (PET) film for backing, without trapping air. The obtained workpiece is then cut to 25 mm in width × 100 mm in length to prepare a specimen.

The lower limit of the total thickness of the adhesive tape of the present invention is preferably 10 $\mu$m. When the total thickness of the adhesive tape of the present invention is 10 $\mu$m or greater, the adhesive tape of the present invention can be more easily bonded to an adherend. The lower limit of the total thickness of the adhesive tape of the present invention is more preferably 20 $\mu$m, still more preferably 30 $\mu$m.

The upper limit of the total thickness of the adhesive tape of the present invention is preferably 1,000 $\mu$m. When the thickness of the adhesive tape of the present invention is 1,000 $\mu$m or less, the tape can have good processability. Moreover, the adhesive tape and the composite structure of the present invention can be recycled without separation more easily. The upper limit of the total thickness of the adhesive tape of the present invention is more preferably 500 $\mu$m, still more preferably 300 $\mu$m.

The composite structure of the present invention preferably includes a primer layer between the adherend member and the adhesive member as long as the effects of the present invention are not impaired. The primer layer between the adherend member and the adhesive member allows firmer bonding between the adherend member and the adhesive member. This can further reduce peeling of the adhesive tape from the member containing a polyolefin resin in pressing the materials in recycling, thus making it easier to recycle the composite structure of the present invention without separating the adhesive member and the adherend member.

The primer layer may have any shape, but it preferably has the same shape as the bonding interface between the adherend member and the adhesive member. The primer layer having such a shape allows firmer bonding between the adherend member and the adhesive member.

Examples of a primer forming the primer layer include urethane primers, polyolefin primers, acrylic primers, and metal alkoxide primers. In particular, to more firmly bond the adherend member and the adhesive member, the primer preferably includes at least one selected from the group consisting of a urethane primer, a polyolefin primer, and a metal alkoxide primer. To more easily recycle the composite structure of the present invention without separation, the primer more preferably includes a polyolefin primer.

The urethane primer refers to a primer having a urethane bond. Specific examples thereof include K-500 (available from 3M).

The polyolefin primer refers to a primer including an olefin-derived structural unit. Specific examples thereof include Surflen P-1000 (available from Mitsubishi Chemical Corporation). Preferred among these are primers containing chlorinated polypropylene. Examples of primers containing chlorinated polypropylene include Hardlen 13-LP (available from TOYOBO MC Corporation).

The acrylic primer refers to a primer containing a (meth)acryloyl group. Specific examples thereof include Polyment NK-350 (available from Nippon Shokubai Co., Ltd.).

The metal alkoxide primer refers to a primer containing a metal alkoxide group. Specific examples thereof include AP111 (available from 3M).

The primer layer may be produced by the following method, for example.

Specifically, the primer layer can be formed by directly applying the primer to a surface of the adherend member with a brush or the like and drying the primer.

The composite structure of the present invention may be produced by, for example, a method including producing the adhesive tape by the above-described method and fixing a member containing a polyolefin resin using the adhesive tape produced.

Alternatively, the composite structure of the present invention can be produced by a method including spot application of the adhesive member to a surface of an adherend member containing a polyolefin resin.

The present invention also encompasses a polyolefin resin molded article molded from the composite structure of the present invention. The polyolefin resin molded article of the present invention has excellent quality despite containing the resin recycled from the adhesive member and the adherend member containing a polyolefin resin. The polyolefin resin molded article of the present invention is thus useful as a recycled product.

The polyolefin resin molded article of the present invention is obtained by recycling the composite structure. The polyolefin resin molded article of the present invention encompasses not only a molded article produced using a polyolefin resin raw material obtained by recycling, but also a polyolefin resin raw material obtained by recycling.

Examples of the polyolefin resin raw material include polyolefin resin pellets and polyolefin resin powder. Examples of the molded article produced using the polyolefin resin raw material include home appliances, stationery, daily use items, and vehicle components of automobile members.

The polyolefin resin molded article of the present invention can be obtained by, for example, kneading the composite structure without separation with heating and then molding the resulting resin. Examples of a device used for kneading with heating include, but are not limited to, a blender, a kneader, a mixing roll, a Banbury mixer, aplast-mill, and a single or twin screw extruder. The molding may be performed by fluidizing the polyolefin resin raw material under heat and easily molding the material into any shape using a method such as injection molding, extrusion molding, or blow molding.

The present invention also encompasses an automobile member including the composite structure of the present invention or the polyolefin resin molded article of the present invention. The automobile member of the present invention can be recycled without separation, which can reduce the environmental load.

Examples of the automobile member containing the polyolefin resin molded article include an automobile member including a vehicle component composed of the polyolefin resin molded article.

Examples of the automobile member containing the composite structure include an automobile member including polyolefin resin-containing vehicle components bonded to each other with an adhesive tape.

The present invention also encompasses a method for producing a polyolefin resin molded article, including a step of molding the composite structure of the present invention without separation..

The method for producing a polyolefin resin molded article involves recycling the composite structure without separation, and thus can further reduce the environmental load in production.

Examples of the step of molding performed without separating the composite structure include a step of kneading the composite structure without separation with heating and then molding the resulting resin. Examples of a device used for kneading with heating include, but are not limited to, a blender, a kneader, a mixing roll, a Banbury mixer, a plast-mill, and a single or twin screw extruder. The molding may be performed by fluidizing the polyolefin resin raw material under heat and easily molding the material into any shape using a method such as injection molding, extrusion molding, or blow molding.

The polyolefin resin molded article obtained using the production method of the present invention is a recycled product obtained by recycling the adhesive member and the member containing a polyolefin resin without separation, and is useful from the standpoint of reducing the environmental load.

The polyolefin resin molded article obtained using the production method of the present invention encompasses not only a molded article produced using a polyolefin resin raw material, but also a polyolefin resin raw material.

Examples of the polyolefin resin raw material include polyolefin resin pellets and polyolefin resin powder. Examples of the molded article produced using the polyolefin resin raw material include home appliances, stationery, daily use items, and vehicle components of automobile members.

- Advantageous Effects of Invention

The present invention can provide a composite structure that allows the adhesive member and the adherend members to be recycled without separation. The present invention can also provide a polyolefin resin molded article molded from the composite structure. The present invention can also provide an automobile member including the composite structure or the polyolefin resin molded article. The present invention can also provide a method for producing a polyolefin resin molded article using the composite structure.

BRIEF DESCRIPTION OF DRAWINGS

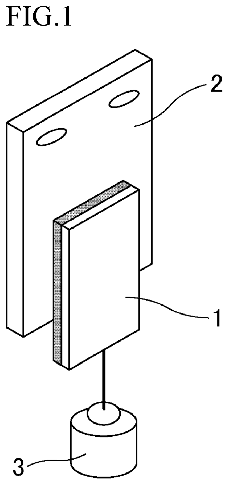

FIG. 1 is a schematic view of a holding test at high temperature.

DESCRIPTION OF EMBODIMENTS

In the following, embodiments of the present invention are described in more detail with reference to examples. The present invention should not be limited to these examples.

(Production of styrene elastomer-containing film)

Polypropylene (PL500A, available from SunAllomer Ltd.) and an SEBS block copolymer (DYNARON 8300P, available from ENEOS Materials Corporation) were used at a mass ratio of 9:1 as a composition for forming a styrene elastomer-containing film. The polypropylene and SEBS block copolymer were supplied to a twin-screw extruder for extrusion molding, melt-kneaded at 200°C, and then extruded into a 100-μm-thick styrene elastomer-containing film.

The obtained styrene elastomer-containing film was subjected to differential scanning calorimetry (DSC) using a differential scanning calorimeter (DSC-7020, available from Hitachi High-Tech Science Corporation) in a nitrogen atmosphere at a temperature increase rate of 10°C/min and a measurement temperature from 30°C to 500°C. From the obtained differential scanning calorimetry curve, the endothermic peak temperature was read. The result showed that the styrene elastomer-containing film had a melting point of 160°C.

(Example 1)

(Synthesis of acrylic copolymer)

A reaction vessel equipped with a thermometer, a stirrer, and a condenser was charged with 100 parts by mass of ethyl acetate, 40 parts by mass of cyclohexane, and a monomer mixture with the monomer proportions shown in Table 1. Subsequently, nitrogen gas was introduced to purge dissolved oxygen before the reaction vessel was heated to 60°C under nitrogen gas flow. Subsequently, 0.1 parts by mass of azobisisobutyronitrile as a polymerization initiator was added into the reaction vessel, and polymerization was started at a constant temperature of 60°C. Then, four hours after the start of the polymerization, 0.5 parts by mass of t-hexyl peroxypivalate was added to allow the polymerization reaction to continue. A total of six hours of polymerization reaction was performed from the start of polymerization, whereby a solution containing an acrylic copolymer was obtained.

The obtained acrylic copolymer was subjected to measurement of the weight average molecular weight (Mw) thereof using a gel permeation chromatograph (GPC) (2690 Separations Module, available from Waters Corporation) under the conditions below. Table 1 shows the results.

<GPC measurement conditions>

    Solvent: tetrahydrofuran
    Sample flow rate: 1 mL/min
    Detector: refractive index detector RI
    Column: GPC KF-806L (available from Showa Denko K.K.)
    Column temperature (measurement temperature): 40°C
    Injection volume: 20 μL

(Measurement of glass transition temperature of acrylic copolymer)

The glass transition temperature of the obtained acrylic copolymer was measured by a differential scanning calorimetry using a differential scanning calorimeter (e.g., 220C, available from Seiko Instruments Inc.) in a nitrogen atmosphere (nitrogen flow, flow rate 50 mL/min) by a method in conformity with JIS K6240:2011 at a measurement temperature from -100°C to 200°C and a temperature increase rate of 10°C/min. Table 1 shows the results.

(Calculation of SP value of acrylic copolymer)

The SP value of the acrylic copolymer was calculated by the Fedor method (R. F. Fedors, Polym. Eng. Sci., 14(2), 147-154 (1974)) using a weighted average based on the SP values and proportions of the structural unit monomers contained in the acrylic copolymer. Table 1 shows the results.

(Preparation of adhesive member)

To the obtained solution of the acrylic copolymer were added 10 parts by mass of Pensel D-135 (available from Arakawa Chemical Industries Ltd.) as a tackifier resin and 0.5 parts by mass of Desmodur L-75 (C) (available from Covestro) as a crosslinking agent relative to 100 parts by mass of the solids content of the solution, whereby a solution containing an adhesive composition was obtained.

The obtained solution containing the adhesive composition was sufficiently stirred and then applied, using a doctor knife, to the release-treated side of a 50-μm-thick polyethylene terephthalate (PET) release film having one release-treated side, and the applied solution was dried by heating at 110°C for 10 minutes to form an adhesive layer (thickness 50 μm) containing an adhesive A formed from the adhesive composition. Furthermore, a 25-μm-thick PET release film having one release-treated side was provided. The formed adhesive layer was placed on the release-treated side, whereby an adhesive tape including the PET release films was obtained as an adhesive member.

(Measurement of gel fraction of adhesive)

First, 0.1 g of the adhesive was sampled from the adhesive layer of the obtained adhesive tape, immersed in 50 mL of tetrahydrofuran (THF), and shaken with a shaker at 23°C at 200 rpm for 24 hours. After shaking, THF was separated from the adhesive swollen with THF by filtration using a metal mesh (opening #200 mesh, mass: $W_4$ (g)). The adhesive swollen with THF was dried at 110°C for one hour, and then the mass $W_5$ (g) of the adhesive including the metal mesh was measured. The gel fraction was calculated using the following equation (3). Table 1 shows the results.

$$\text{Gel fraction (\% by mass)} = 100 \times (W_5 - W_4)/0.1 \quad (3)$$

($W_4$: mass of metal mesh, $W_5$: mass of adhesive after drying (including metal mesh))

(Measurement of 180° peel force at 23°C of adhesive tape for polypropylene)

The obtained adhesive tape was cut into a size of 25 mm in width × 100 mm in length. The PET release film on one side of the obtained adhesive tape was then removed. The adhesive tape was bonded to 23-μm-thick polyethylene terephthalate (PET) without trapping air, whereby a specimen was prepared. A polypropylene plate (RPP 1350, available from C. I. TAKIRON Corporation) was washed with ethanol and then wiped with a dry cloth. The specimen prepared was attached to the polypropylene plate by moving a 2-kg rubber roller back and forth once thereon at a speed of 300 mm/min, whereby a measurement sample was prepared. The obtained measurement sample was subjected to a 180° peel test in conformity with JIS Z0237 using a tensile tester (RTI-1310, available from A&D Company, Ltd.) at 23°C, 50% RH, and a peel rate of 300 mm/min. The adhesive tape was peeled off from the polypropylene plate, whereby the 180° peel force was measured. Table 2 shows the results.

(Measurement of amount of displacement of adhesive tape in holding test at high temperature for polypropylene plate)

The PET release film on one side of the obtained adhesive tape was removed, and the adhesive tape was bonded to 23-μm-thick polyethylene terephthalate (PET) without trapping air. The workpiece was cut into a 25-mm-wide strip. A polypropylene plate (RPP 1350, available from C.I.TAKIRON Corporation) with a width of 50 mm and a length of 75 mm was washed with ethanol and then wiped with a dry cloth. The cut adhesive tape was bonded to the polypropylene plate by moving a 2-kg rubber roller back and forth once thereon at a speed of 300 mm/min, whereby a measurement sample as shown in FIG. 1 was prepared. The measurement sample prepared was put in an 80°C oven and heated for 20 minutes. Then, as shown in FIG. 1, a 500-g weight was attached to the sample to apply a shear load thereto at 80°C and 50% RH. After one hour from the application of the load, the amount of displacement (shift) (mm) from the position of a cut was measured with a scale magnifier. Table 2 shows the results.

(Preparation of composite structure)

The release film on one side of the adhesive tape obtained in (Preparation of adhesive member) described above was removed. To the exposed adhesive layer was bonded a 2-mm-thick block polypropylene (NOVATEC PP BC10HRF, available from Japan Polypropylene Corporation) provided as an adherend member containing a polyolefin resin. They were pressured-bonded by moving a 2-kg rubber roller back and forth once thereon at a speed of 300 mm/min. Furthermore, the release film on the other side of the adhesive tape bonded with the block polypropylene was removed. To the exposed adhesive layer was bonded the same block polypropylene in the same manner. They were pressure-bonded and integrally laminated, followed by aging at 23°C and 50% RH, whereby a composite structure was prepared. At this time, the size of the adhesive tape was determined such that the proportion of the adhesive member in the composite structure satisfied the value shown in Table 2.

(Calculation of proportion of adhesive member in composite structure)

The proportion (% by mass) of the adhesive member in the composite structure was calculated by the following equation (4) using the mass $W_6$ (g) of the adhesive tape measured in (Preparation of adhesive member) described above and the mass $W_7$ (g) of the composite structure measured in (Preparation of composite structure) described above. Table 2 shows the results.

$$\text{Proportion of adhesive member in composite structure (\% by mass)} = (W_7/W_6) \times 100$$

$$(4)$$

(Examples 2 and 28)

(Synthesis of acrylic copolymer)

A solution containing an acrylic copolymer was obtained by polymerization reaction performed as in Example 1, except that the formulation of the monomer mixture was as shown in Table 1.

The obtained acrylic copolymer was subjected to measurement of the weight average molecular weight (Mw) thereof using a gel permeation chromatograph (GPC) (2690 Separations Module, available from Waters Corporation) under the conditions below. Table 1 shows the results.

(Preparation of adhesive member)

A solution containing an adhesive composition was obtained as in Example 1 except that the formulation was as shown in Table 2 or 4.

A 50-μm-thick adhesive layer was formed as in Example 1. Subsequently, the substrate shown in Table 2 or 4 was provided. The formed adhesive layer was bonded to one side of the substrate and aged at 40°C and 50% RH for 48 hours, whereby an adhesive tape as an adhesive member was obtained. The adhesive tape included the substrate and the adhesive layer with the thickness shown in Tabel 2 or 4 on one side of the substrate.

(Preparation of composite structure)

The release film on one side of the adhesive tape obtained in (Preparation of adhesive member) described above was removed. To the exposed adhesive layer was bonded the adherend member shown in Table 2 or 4. They were pressured-bonded and integrally laminated by moving a 2-kg rubber roller back and forth once thereon at a speed of 300 mm/min, and aged at 23°C and 50% RH, whereby a composite structure was prepared. At this time, the size of the adhesive tape was determined such that the proportion of the adhesive member in the composite structure satisfied the value shown in Table 2 or 4.

(Measurement of glass transition temperature of acrylic copolymer), (Calculation of SP value of acrylic copolymer), (Measurement of gel fraction), (Measurement of 180° peel force at 23°C of adhesive tape for polypropylene), (Measurement of amount of displacement in holding test at high temperature for polypropylene plate), and (Calculation of proportion of adhesive member in composite structure) described above were performed as in Example 1, except that in (Measurement of 180° peel force at 23°C of adhesive tape for polypropylene) and (Measurement of amount of displacement in holding test at high temperature for polypropylene plate), the obtained adhesive tape was not backed with the 23-μm-thick polyethylene terephthalate (PET) film and was directly cut into a size of 25 mm in width × 100 mm in length to prepare the specimen. Tables 1, 2, and 4 show the results.

(Examples 3, 11, 23, 24, and 39 and Comparative Example 2)

(Synthesis of acrylic copolymer)

A solution containing an acrylic copolymer was obtained by polymerization reaction performed as in Example 1, except that the formulation of the monomer mixture was as shown in Table 1.

The obtained acrylic copolymer was subjected to measurement of the weight average molecular weight (Mw) thereof using a gel permeation chromatograph (GPC) (2690 Separations Module, available from Waters Corporation) under the conditions below. Table 1 shows the results.

(Preparation of adhesive member)

A solution containing an adhesive composition was obtained as in Example 1 except that the formulation was changed as shown in one of Tables 2 to 6.

An adhesive layer with the thickness shown in one of Tables 2 to 6 was formed as in Example 1. Subsequently, the substrate shown in one of Tables 2 to 6 was provided. The formed adhesive layer was bonded to one side of the substrate. Furthermore, another adhesive layer with the same formulation and thickness was formed and bonded to the other side of the substrate. The resulting workpiece was aged at 40°C and 50% RH for 48 hours, whereby an adhesive tape as an adhesive member was obtained. The adhesive tape included the substrate and the adhesive layers with the thickness shown in one of Tables 2 to 6 on both sides of the substrate.

(Preparation of composite structure)

A composite structure was prepared as in Example 1 except that the adherend member was as shown in one of Tables 2 to 6. At this time, the size of the adhesive tape was determined such that the proportion of the adhesive member in the composite structure satisfied the value shown in one of Tables 2 to 6.

(Measurement of glass transition temperature of acrylic copolymer), (Calculation of SP value of acrylic copolymer), (Measurement of gel fraction), (Measurement of 180° peel force at 23°C of adhesive tape for polypropylene) (Measurement of amount of displacement in holding test at high temperature for polypropylene plate), and (Measurement of proportion of adhesive member based on composite structure taken as 100%) described above were performed as in Example 1. Tables 1 to 6 show the results.

(Example 4)

(Synthesis of acrylic copolymer)

A solution containing an acrylic copolymer was obtained by polymerization reaction performed as in Example 1, except that the formulation of the monomer mixture was as shown in Table 1.

The obtained acrylic copolymer was subjected to measurement of the weight average molecular weight (Mw) thereof using a gel permeation chromatograph (GPC) (2690 Separations Module, available from Waters Corporation) under the conditions below. Table 1 shows the results.

(Preparation of adhesive member)

An adhesive tape including a substrate and a 50-$\mu$m-thick adhesive layer on one side of the substrate was prepared as an adhesive member as in Examples 2 and 28, except that the formulation of the adhesive was as shown in Table 1 and that the substrate was as shown in Table 2.

(Preparation of composite structure)

A 2-mm-thick block polypropylene (NOVATEC PP BC10HRF, available from Japan Polypropylene Corporation) was provided as an adherend member containing a polyolefin resin. To a surface of the adherend member was applied a urethane primer (K-500, available from 3M) in the shape of the adhesive tape to be bonded, and the primer was dried to form a primer layer on the adherend member on the side to be bonded with the adhesive member.

The release film of the adhesive tape obtained in (Preparation of adhesive member) described above was removed. To the exposed adhesive layer was bonded the adherend member such that the primer layer faced the adhesive layer. They were pressured-bonded and integrally laminated by moving a 2-kg rubber roller back and forth once thereon at a speed of 300 mm/min, and aged at 23°C and 50% RH, whereby a composite structure including the primer layer was prepared. At this time, the size of the adhesive tape was determined such that the proportion of the adhesive member in the composite structure satisfied the value shown in Table 2.

(Measurement of glass transition temperature of acrylic copolymer), (Calculation of SP value of acrylic copolymer), (Measurement of gel fraction), (Measurement of 180° peel force at 23°C of adhesive tape for polypropylene), (Measurement of amount of displacement in holding test at high temperature for polypropylene plate), and (Calculation of proportion of adhesive member based on composite structure taken as 100%) described above were performed as in Example 1, except that in (Measurement of 180° peel force at 23°C of adhesive tape for polypropylene) and (Measurement of amount of displacement in holding test at high temperature for polypropylene plate), the adhesive tape was not backed with the 23-$\mu$m-thick polyethylene terephthalate (PET) film and was directly cut into a size of 25 mm in width $\times$ 100 mm in length to prepare the specimen. Tables 1 and 2 show the results.

(Example 5)

(Synthesis of acrylic copolymer)

A solution containing an acrylic copolymer was obtained by polymerization reaction performed as in Example 1, except that the formulation of the monomer mixture was as shown in Table 1.
The obtained acrylic copolymer was subjected to measurement of the weight average molecular weight (Mw) thereof using a gel permeation chromatograph (GPC) (2690 Separations Module, available from Waters Corporation) under the conditions below. Table 1 shows the results.

(Preparation of adhesive member)

An adhesive tape including a substrate and adhesive layers with a thickness of 50 $\mu$m on both sides of the substrate was prepared as an adhesive member as in Examples 3, 11, 23, 24, and 39 and Comparative Example 2, except that the formulation of the adhesive was as shown in Table 2 and that the substrate was as shown in Table 2.

(Preparation of composite structure)

A 2-mm-thick block polypropylene (NOVATEC PP BC10HRF, available from Japan Polypropylene Corporation) was provided as an adherend member containing a polyolefin resin. To a surface of the adherend member was applied a urethane primer (K-500, available from 3M) in the shape of the adhesive tape to be bonded, and the primer was dried to form a primer layer on the adherend member on the side to be bonded with the adhesive member.
The release film on one side of the adhesive tape obtained in (Preparation of adhesive member) described above was removed. To the exposed adhesive layer was bonded the adherend member such that the primer layer faced the adhesive layer. They were pressured-bonded and integrally laminated by moving a 2-kg rubber roller back and forth once thereon at a speed of 300 mm/min. Furthermore, the release film on the other side of the adhesive tape bonded with the adherend member was removed. To the exposed adhesive layer was bonded the same block polypropylene with the same primer layer in the same manner. They were pressure-bonded and integrally laminated in the same manner, followed by aging at 23°C and 50% RH, whereby a composite structure was prepared. At this time, the size of the adhesive tape was determined such that the proportion of the adhesive member in the composite structure satisfied the value shown in Table 2.
(Measurement of glass transition temperature of acrylic copolymer), (Calculation of SP value of acrylic copolymer), (Measurement of gel fraction), (Measurement of 180° peel force at 23°C of adhesive tape for polypropylene) (Measurement of amount of displacement in holding test at high temperature for polypropylene plate), and (Measurement of proportion of adhesive member in composite structure) described above were performed as in Example 1. Tables 1 and 2 show the results.

(Examples 6 to 10, 12 to 22, 25 to 27, and 33 to 38 and Comparative Examples 1 and 3)

An adhesive member and a composite structure were obtained and subjected to measurements as in Example 1, except that the formulation of the monomer mixture in (Synthesis of acrylic copolymer) described above was as shown in Table 1, the formulation of the adhesive and the thickness of the adhesive layer(s) in (Preparation of adhesive member) described above were changed as shown in Tables 1 to 6, and the adherend member in (Preparation of composite structure) described above was changed as shown in Tables 2 to 6. Tables 1 to 6 show the results.

(Examples 29 to 32)

(Synthesis of acrylic copolymer)

A solution containing an acrylic copolymer was obtained by polymerization reaction performed as in Example 1, except that the formulation of the monomer mixture was as shown in Table 1.

The obtained acrylic copolymer was subjected to measurement of the weight average molecular weight (Mw) thereof using a gel permeation chromatograph (GPC) (2690 Separations Module, available from Waters Corporation) under the conditions below. Table 1 shows the results.

(Preparation of adhesive member)

An adhesive tape including 50-$\mu$m-thick adhesive layers was prepared as an adhesive member as in Example 1, except that the formulation of the adhesive was as shown in Tables 4 and 5.

(Preparation of composite structure)

A 2-mm-thick block polypropylene (NOVATEC PP BC10HRF, available from Japan Polypropylene Corporation) was provided as an adherend member containing a polyolefin resin. To a surface of the adherend member was applied the primer shown in Table 4 or 5 in the shape of the adhesive tape to be bonded, and the primer was dried to form a primer layer on the adherend member on the side to be bonded with the adhesive member.

The release film on one side of the adhesive tape obtained in (Preparation of adhesive member) described above was removed. To the exposed adhesive layer was bonded the adherend member such that the primer layer faced the adhesive layer. They were pressured-bonded by moving a 2-kg rubber roller back and forth once thereon at a speed of 300 mm/min. Furthermore, the release film on the other side of the adhesive tape bonded with the adherend member was removed. To the exposed adhesive layer was bonded the same block polypropylene with the same primer layer in the same manner. They were pressure-bonded and integrally laminated, followed by aging at 23°C and 50% RH, whereby a composite structure was prepared. At this time, the size of the adhesive tape was determined such that the proportion of the adhesive member in the composite structure satisfied the value shown in Table 4 or 5.

(Measurement of glass transition temperature of acrylic copolymer), (Calculation of SP value of acrylic copolymer), (Measurement of gel fraction), (Measurement of 180° peel force at 23°C of adhesive tape for polypropylene) (Measurement of amount of displacement in holding test at high temperature for polypropylene plate), and (Measurement of proportion of adhesive member in composite structure) described above were performed as in Example 1. Tables 1, 4, and 5 show the results.

The monomers shown in Table 1 are as follows.

MA: methyl acrylate
· BA: n-butyl acrylate
· n-Hex: n-hexyl acrylate
· N-HA: n-heptyl acrylate
· 20A: 1-methylheptyl acrylate
· 2EHA: 2-ethylhexyl acrylate
· LA: lauryl acrylate
· EBm: ethylene-butylene macromonomer (HPVM-L1253, available from Kraton Polymers Japan, weight average molecular weight: 7,000).
· AAc: acrylic acid
·4HBA: 4-hydroxybutyl acrylate

[Table 1]

| Type of adhesive | A | B | C | D | E | F | G | H | I | J | K | L | M | N | O | P | Q | R | S | T | U | V | W | X |
|---|---|---|---|---|---|---|---|---|---|---|---|---|---|---|---|---|---|---|---|---|---|---|---|---|
| Structural unit monomer of acrylic copolymer (% by mass) — Alkyl (meth)acrylate — MA | – | – | – | – | – | – | 14.78 | 14.78 | – | – | – | – | – | – | – | 20 | – | – | – | – | – | – | – | – |
| BA | – | – | – | 26.95 | – | 26.95 | – | – | 36.95 | 36.95 | 55.443 | 55.443 | 65 | 65 | – | – | – | – | 61 | 61 | – | – | – | – |
| n-Hex | – | – | – | – | – | – | – | – | – | – | – | – | – | – | – | – | – | 93.9 | – | – | 73.9 | – | – | – |
| n-HA | – | – | – | – | – | – | – | – | – | – | – | – | – | – | – | – | – | – | – | – | – | 73.9 | – | – |
| 2OA | – | – | – | – | – | – | – | – | – | – | – | – | – | – | – | – | – | – | – | – | – | – | 73.9 | – |
| 2EHA | 73.9 | 73.9 | 88.9 | 26.95 | 73.9 | 26.95 | 59.12 | 59.12 | 36.95 | 36.95 | 18.457 | 18.457 | – | – | 73.9 | 57.7 | 76.9 | – | – | – | – | – | – | – |
| LA | – | – | – | – | – | – | – | – | – | – | – | – | – | – | – | – | – | – | 12.9 | 15.9 | – | – | – | 77.7 |
| Olefin polymer having polymerizable unsaturated double bond at end — EBm | 20 | 20 | 5 | 40 | 20 | 40 | 20 | 20 | 20 | 20 | 20 | 20 | 20 | 20 | 20 | 20 | 20 | – | 20 | 20 | 20 | 20 | 20 | 20 |
| Monomer containing polar functional group — AAc | 6.0 | 6.0 | 6.0 | 6.0 | 6.0 | 6.0 | 6.0 | 6.0 | 6.0 | 6.0 | 6.0 | 6.0 | 6.0 | 6.0 | 6.0 | 0.3 | 3.0 | 6.0 | 6.0 | 3.0 | 6.0 | 6.0 | 6.0 | 0.3 |
| 4HBA | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 2.0 | 0.1 | 0.1 | 0.1 | 0.1 | 0.1 | 0.1 | 0.1 | 2.0 |
| Proportion of structural unit derived from alkyl (meth)acrylate containing alcohol-derived C1-C4 alkyl group in acrylic copolymer (% by mass) | 0 | 0 | 0 | 26.95 | 0 | 26.95 | 14.8 | 14.8 | 36.95 | 36.95 | 55.443 | 55.443 | 65 | 65 | 0 | 20 | 0 | 93.9 | 61 | 61 | 0 | 0 | 0 | 0 |
| Weight average molecular weight of acrylic copolymer (in units of 10000) | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 |
| Glass transition temperature of acrylic copolymer (°C) | -63.7 | -63.7 | -64 | -59 | -63.7 | -59 | -54.5 | -54.5 | -57.7 | -57.7 | -54.6 | -54.6 | -53 | -53 | -63.7 | -56.7 | -66.7 | -64.2 | -53.7 | -56.9 | -59.8 | -62.2 | -43.9 | -33.6 |
| SP value of acrylic copolymer | 9.50 | 9.50 | 9.46 | 9.85 | 9.50 | 9.85 | 9.73 | 9.73 | 9.76 | 9.76 | 9.89 | 9.89 | 9.97 | 9.97 | 9.50 | 9.61 | 9.36 | 9.45 | 9.94 | 9.78 | 9.79 | 9.70 | 9.50 | 9.24 |
| Formulation of adhesive (parts by mass) — Acrylic copolymer | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 | 100 |
| Tackifier resin — Rosin resin (Pensel D-135, Arakawa Chemical Industries Ltd.) | 10.0 | 40.0 | – | – | – | – | – | – | 10.0 | 10.0 | – | 10.0 | – | 10.0 | – | 10.0 | 10.0 | 10.0 | 10.0 | 10.0 | 10.0 | 10.0 | 10.0 | 10.0 |
| Tackifier resin — Terpene resin (YS Resin PX1250, Yasuhara Chemical Co., Ltd.) | – | – | – | 20.0 | 20.0 | – | – | – | – | – | – | – | – | – | – | – | – | – | – | – | – | – | – | – |
| Crosslinking agent — Isocyanate crosslinking agent (Desmodur L-75 (C), Covestro) | 0.5 | 1.0 | 0.5 | 0.5 | 0.4 | 0.5 | – | 0.2 | 0.2 | 0.7 | – | 0.5 | 0 | 0.5 | 0 | 0.05 | 0.5 | 1.0 | 0.4 | 0.4 | 0.4 | 0.5 | 0.5 | 0.05 |
| Gel fraction of adhesive (% by mass) | 50 | 40 | 40 | 50 | 30 | 70 | 0 | 44 | 40 | 50 | 0 | 30 | 0 | 40 | 0 | 50 | 40 | 40 | 40 | 40 | 40 | 50 | 50 | 50 |

<Evaluation>

The composite structures obtained in the examples and the comparative examples were evaluated as follows. Tables 2 to 6 show the results.

(Recyclability)

(1) Preparation of molded article from composite structure

The obtained composite structure (200 g) was cut finely and kneaded with heating at 200°C and 50 rpm using a plast-mill. Then, 7 g of the resin composition obtained by kneading with heating was weighed out and molded into a strip-shaped specimen (size 80 mm × 10 mm × 4 mm in thickness) as a molded article molded from the composite structure for Charpy impact resistance evaluation. The molding was performed using an injection molding machine (HAAKE Minilab3, available from Thermo Fisher Scientific) at a cylinder temperature of 200°C, a mold temperature of 40°C, an inject press of 500 bar/10 sec, and a post press of 400 bar/10 sec.

The plast-mill was HAAKE RheoDrive 16OS(available from Thermo Fisher Scientific), with a roller rotor Rheomix 3000 OS (available from Thermo Fisher Scientific) connected to the mixer unit.

Here, the composite structure of Comparative Example 3 was kneaded with heating at 260°C and injection-molded into a specimen at a cylinder temperature of 260°C and a mold temperature of 90°C.

(2) Preparation of molded article from adherend member alone

A strip-shaped specimen as a molded article molded from the adherend member alone for Charpy impact resistance evaluation was prepared as in (1) Preparation of molded article from composite structure described above, except that 200 g of the adherend member used in each of the examples and comparative examples was used instead of 200 g of the composite structure.

Here, the adherend member of Comparative Example 3 was kneaded with heating at 260°C and injection-molded into a specimen at a cylinder temperature of 260°C and a mold temperature of 90°C.

(3) Charpy impact resistance evaluation

The strip-shaped specimens obtained in (1) Preparation of molded article from composite structure and (2) Preparation of molded article from adherend member alone described above were each subject to notch processing (depth: 2 mm) in conformity with JIS K7111-1 using a notching machine (Notching Machine No. 189-PNCA, available from Yasuda Seiki Seisakusho, Ltd.). Using a Charpy impact tester with a thermostatic chamber (Impact Tester No. 258-L-PC, available from Yasuda Seiki Seisakusho, Ltd.), an edgewise impact of 2 J was applied to each specimen with the hammer at 23°C, and the impact strength was measured. The measurement of the impact strength was repeated five times, and the average of the three values obtained after excluding the maximum and minimum values was used.

Based on the obtained impact strength, the Charpy impact resistance decrease percentage (%) was calculated using the following equation.

Charpy impact resistance decrease percentage (%) = 100 - [((Impact strength of molded article molded from composite structure)/(Impact strength of molded article molded from adherend member alone)) × 100]

Based on the obtained Charpy impact resistance decrease percentage (%), the recyclability of the composite structure of the present invention was evaluated in accordance with the following criteria.

∞: A Charpy impact resistance decrease percentage of 5.0% or lower
∘: A Charpy impact resistance decrease percentage of higher than 5.0% and 7.0% or lower
×: A Charpy impact resistance decrease percentage of higher than 7.0%

The evaluation results "∞" and "∘" indicate that the composite structure of the present invention and polyolefin resins such as polypropylene can be recycled without separation. The better the evaluation results, the easier the recycling.

[Table 2]

| | | | Example | | | | | | | | | |
|---|---|---|---|---|---|---|---|---|---|---|---|---|
| | | | 1 | 2 | 3 | 4 | 5 | 6 | 7 | 8 | 9 | 10 |
| Adhesive member (adhesive tape) | Substrate | Olefin fiber non-woven fabric (proportion of olefin-derived structural unit: 100% by mass) (All Olefin Paper-20, Nippon Paper Papylia Co., Ltd., thickness: 90 μm, melting point: 130°C) | - | - | Present | - | Present | - | - | - | - | - |
| | | Cast polypropylene film (proportion of olefin (propylene)-derived structural unit: 100% by mass) (Torayfan NO, Toray Industries Inc., thickness: 50 μm, melting point: 160°C) | - | Present | - | Present | - | - | - | - | - | - |
| | | Styrene elastomer-containing film (polypropylene:SEBS block copolymer (mass ratio 9:1)) (thickness: 100 μm, melting point: 160°C) | - | - | - | - | - | - | - | - | - | - |
| | Adhesive layer | Type of adhesive | A | A | A | A | A | A | A | A | A | A |
| | | Side with adhesive layer | Both sides | One side | Both sides | One side | Both sides | Both sides | Both sides | Both sides | Both sides | Both sides |
| | | Thickness of each adhesive layer (μm) | 50 | 50 | 50 | 50 | 50 | 50 | 50 | 50 | 50 | 50 |
| | Primer layer | Urethane primer (K-500, 3M) | - | - | - | Present | Present | - | - | - | - | - |
| | | Polyolefin primer (Surflen P-1000, Mitsubishi Chemical Corporation) | - | - | - | - | - | - | - | - | - | - |
| | | Acrylic primer (aminoethylated acrylic polymer, Polyment NK-350, Nippon Shokubai Co., Ltd.) | - | - | - | - | - | - | - | - | - | - |
| | | Chlorinated polypropylene primer (Hardlen 13-LP, TOYOBO MC Corporation) | - | - | - | - | - | - | - | - | - | - |
| | | Metal alkoxide primer (AP111, 3M) | - | - | - | - | - | - | - | - | - | - |

(continued)

| | | Example | | | | | | | | | |
|---|---|---|---|---|---|---|---|---|---|---|---|
| | | 1 | 2 | 3 | 4 | 5 | 6 | 7 | 8 | 9 | 10 |
| Adherend member | Injection molding grade block polypropylene (polyolefin resin content: 100 % by mass) (NOVATEC PP BC10HRF, Japan Polypropylene Corporation, thickness: 2 mm) | Present | Present | Present | Present | Present | - | - | - | Present | Present |
| | Injection molding grade block polypropylene (polyolefin resin content: 100 % by mass) (NOVATEC PP BC03B, Japan Polypropylene Corporation, thickness: 2 mm) | - | - | - | - | - | Present | - | - | - | - |
| | Injection molding grade homopolypropylene (polyolefin resin (polypropylene) content: 100 % by mass) (SA08A, Japan Polypropylene Corporation, thickness: 2 mm) | - | - | - | - | - | - | Present | - | - | - |
| | Polypropylene plate (polyolefin resin content: 100% by mass, proportion of propylene-derived structural unit: 96 % by mass) (PPE P310A, C.I.TAKIRON Corporation, thickness: 2 mm) | - | - | - | - | - | - | - | Present | - | - |
| | Polypropylene plate, dark gray (polyolefin resin content: 100% by mass, proportion of propylene-derived structural unit: 96 % by mass) (RPP 1950. C.I.TAKIRON Corporation. thickness: 2 mm) | - | - | - | - | - | - | - | - | - | - |
| | Polycarbonate plate (polyolefin resin content: 0% by mass) (PC-1600, C.I.TAKIRON Corporation, thickness: 2 mm) | - | - | - | - | - | - | - | - | - | - |
| Side with adherend member | | Both sides | One side | Both sides | One side | Both sides | Both sides | Both sides | Both sides | Both sides | Both sides |
| 180° Peel force at 23°C of adhesive tape for polypropylene (N/25 mm) | | 10.0 | 11.0 | 11.0 | 15.0 | 17.0 | 8.0 | 10.0 | 10.0 | 10.0 | 10.0 |
| Amount of displacement of adhesive tape in holding test at high temperature for polypropylene plate (mm) | | 0.4 | 0.5 | 0.5 | 0.1 | 0.2 | 0.1 | 0.4 | 0.4 | 0.4 | 0.4 |
| Proportion of adhesive member in composite structure (% by mass) | | 1.0 | 1.0 | 1.0 | 1.0 | 1.0 | 1.0 | 1.0 | 1.0 | 0.1 | 0.5 |

| | | | Example | | | | | | | | | |
|---|---|---|---|---|---|---|---|---|---|---|---|---|
| | | | 1 | 2 | 3 | 4 | 5 | 6 | 7 | 8 | 9 | 10 |
| Evaluation | Recyclability | Impact strength of molded article molded from member alone (kJ/m$^2$) | 6.5 | 6.5 | 6.5 | 6.5 | 6.5 | 9.0 | 2.0 | 6.6 | 6.5 | 6.5 |
| | | Charpy impact resistance decrease percentage (%) | 3.0 | 3.0 | 3.0 | 3.0 | 3.0 | 0 | 5.0 | 3.0 | 0 | 2.0 |
| | | Rating | ○○ | ○○ | ○○ | ○○ | ○○ | ○○ | ○○ | ○○ | ○○ | ○○ |

**[0289]**  [0159]

[Table 3]

| | | | Example 11 | 12 | 13 | 14 | 15 | 16 | 17 | 18 | 19 | 20 |
|---|---|---|---|---|---|---|---|---|---|---|---|---|
| Adhesive member (adhesive tape) | Substrate | Olefin fiber non-woven fabric (proportion of olefin-derived structural unit: 100% by mass) (All Olefin Paper-20, Nippon Paper Papylia Co., Ltd., thickness: 90 μm, melting point: 130°C) | - | - | - | - | - | - | - | - | - | - |
| | | Cast polypropylene film (proportion of olefin (propylene)-derived structural unit: 100% by mass) (Torayfan NO, Toray Industries Inc., thickness: 50 μm, melting point: 160°C) | Present | - | - | - | - | - | - | - | - | - |
| | | Styrene elastomer-containing film (polypropylene:SEBS block copolymer (mass ratio 9:1)) (thickness: 100 μm, melting point: 160°C) | - | - | - | - | - | - | - | - | - | - |
| | Adhesive layer | Type of adhesive | A | B | C | D | E | F | G | H | I | J |
| | | Side with adhesive layer | Both sides | Both sides | Both sides | Both sides | Both sides | Both sides | Both sides | Both sides | Both sides | Both sides |
| | | Thickness of each adhesive layer (μm) | 30 | 50 | 50 | 50 | 50 | 50 | 50 | 50 | 50 | 50 |
| Primer layer | | Urethane primer (K-500, 3M) | - | - | - | - | - | - | - | - | - | - |
| | | Polyolefin primer (Surflen P-1000, Mitsubishi Chemical Corporation) | - | - | - | - | - | - | - | - | - | - |
| | | Acrylic primer (aminoethylated acrylic polymer, Polyment NK-350, Nippon Shokubai Co., Ltd.) | - | - | - | - | - | - | - | - | - | - |
| | | Chlorinated polypropylene primer (Hardlen 13-LP, TOYOBO MC Corporation) | - | - | - | - | - | - | - | - | - | - |
| | | Metal alkoxide primer (AP111, 3M) | - | - | - | - | - | - | - | - | - | - |

| | | Example | | | | | | | | | |
|---|---|---|---|---|---|---|---|---|---|---|---|
| | | 11 | 12 | 13 | 14 | 15 | 16 | 17 | 18 | 19 | 20 |
| Adherend member | Injection molding grade block polypropylene (polyolefin resin content: 100 % by mass) (NOVATEC PP BC10HRF, Japan Polypropylene Corporation, thickness: 2 mm) | - | Present | Present | Present | Present | Present | Present | Present | Present | Present |
| | Injection molding grade block polypropylene (polyolefin resin content: 100 % by mass) (NOVATEC PP BC03B, Japan Polypropylene Corporation, thickness: 2 mm) | Present | - | - | - | - | - | - | - | - | - |
| | Injection molding grade homopolypropylene (polyolefin resin (polypropylene) content: 100 % by mass) (SA08A, Japan Polypropylene Corporation, thickness: 2 mm) | - | - | - | - | - | - | - | - | - | - |
| | Polypropylene plate (polyolefin resin content: 100% by mass, proportion of propylene-derived structural unit: 96 % by mass) (PPE P310A, C.I.TAKIRON Corporation, thickness: 2 mm) | - | - | - | - | - | - | - | - | - | - |
| | Polypropylene plate, dark gray (polyolefin resin content: 100% by mass, proportion of propylene-derived structural unit: 96 % by mass) (RPP 1950, C.I.TAKIRON Corporation, thickness: 2 mm) | - | - | - | - | - | - | - | - | - | - |
| | Polycarbonate plate (polyolefin resin content: 0% by mass) (PC-1600, C.I.TAKIRON Corporation, thickness: 2 mm) | - | - | - | - | - | - | - | - | - | - |
| | Side with adherend member | Both sides | One side | Both sides | Both sides | Both sides | Both sides | Both sides | Both sides | Both sides | Both sides |
| 180° Peel force at 23°C of adhesive tape for polypropylene (N/25 mm) | | 12.0 | 4.0 | 9.0 | 16.0 | 15.0 | 11.0 | 10.0 | 10.0 | 9.0 | 11.0 |
| Amount of displacement of adhesive tape in holding test at high temperature for polypropylene plate (mm) | | 0.4 | 0.5 | 0.4 | 0.5 | 1.1 | 0.4 | 2.0 | 0.5 | 1.0 | 0.6 |
| Proportion of adhesive member in composite structure (% by mass) | | 3.0 | 1.0 | 1.0 | 1.0 | 1.0 | 1.0 | 1.0 | 1.0 | 1.0 | 1.0 |

EP 4 755 985 A1

| | | | Example | | | | | | | | | |
| --- | --- | --- | --- | --- | --- | --- | --- | --- | --- | --- | --- | --- |
| | | | 11 | 12 | 13 | 14 | 15 | 16 | 17 | 18 | 19 | 20 |
| Evaluation | Recyclability | Impact strength of molded article molded from member alone (kJ/m$^2$) | 9.0 | 6.5 | 6.5 | 6.5 | 6.5 | 6.5 | 6.5 | 6.5 | 6.5 | 6.5 |
| | | Charpy impact resistance decrease percentage (%) | 6.5 | 4.0 | 5.0 | 5.0 | 3.0 | 6.0 | -5.0 | 1.0 | -5.0 | 3.0 |
| | | Rating | ○ | ○○ | ○○ | ○○ | ○○ | ○ | ○○ | ○○ | ○○ | ○○ |

**[0290]** [0160]

[Table 4]

| | | | Example | | | | | | | | | |
|---|---|---|---|---|---|---|---|---|---|---|---|---|
| | | | 21 | 22 | 23 | 24 | 25 | 26 | 27 | 28 | 29 | 30 |
| Adhesive member (adhesive tape) | Substrate | Olefin fiber non-woven fabric (proportion of olefin-derived structural unit: 100% by mass) (All Olefin Paper-20, Nippon Paper Papylia Co., Ltd., thickness: 90 $\mu$m, melting point: 130°C) | - | - | Present | Present | - | - | - | - | - | - |
| | | Cast polypropylene film (proportion of olefin (propylene)-derived structural unit: 100% by mass) (Torayfan NO, Toray Industries Inc., thickness: 50 $\mu$m, melting point: 160°C) | - | - | - | - | - | - | - | Present | - | - |
| | | Styrene elastomer-containing film (polypropylene:SEBS block copolymer (mass ratio 9:1)) (thickness: 100 $\mu$m, melting point: 160°C) | - | - | - | - | - | - | - | - | - | - |
| | Adhesive layer | Type of adhesive | K | L | M | N | O | P | Q | Q | A | A |
| | | Side with adhesive layer | Both sides | Both sides | Both sides | Both sides | Both sides | Both sides | Both sides | One side | Both sides | Both sides |
| | | Thickness of each adhesive layer ($\mu$m) | 50 | 50 | 30 | 30 | 50 | 50 | 50 | 50 | 50 | 50 |
| Primer layer | | Urethane primer (K-500, 3M) | - | - | - | - | - | - | - | - | - | - |
| | | Polyolefin primer (Surflen P-1000, Mitsubishi Chemical Corporation) | - | - | - | - | - | - | - | - | Present | - |
| | | Acrylic primer (aminoethylated acrylic polymer, Polyment NK-350, Nippon Shokubai Co., Ltd.) | - | - | - | - | - | - | - | - | - | Present |
| | | Chlorinated polypropylene primer (Hardlen 13-LP, TOYOBO MC Corporation) | - | - | - | - | - | - | - | - | - | - |
| | | Metal alkoxide primer (AP111, 3M) | - | - | - | - | - | - | - | - | - | - |

| | | Example | | | | | | | | | |
| | | 21 | 22 | 23 | 24 | 25 | 26 | 27 | 28 | 29 | 30 |
|---|---|---|---|---|---|---|---|---|---|---|---|
| Adherend member | Injection molding grade block polypropylene (polyolefin resin content: 100 % by mass) (NOVATEC PP BC10HRF, Japan Polypropylene Corporation, thickness: 2 mm) | Present | Present | Present | Present | Present | Present | Present | - | Present | Present |
| | Injection molding grade block polypropylene (polyolefin resin content: 100 % by mass) (NOVATEC PP BC03B, Japan Polypropylene Corporation, thickness: 2 mm) | - | - | - | - | - | - | - | - | - | - |
| | Injection molding grade homopolypropylene (polyolefin resin (polypropylene) content: 100 % by mass) (SA08A, Japan Polypropylene Corporation, thickness: 2 mm) | - | - | - | - | - | - | - | - | - | - |
| | Polypropylene plate (polyolefin resin content: 100% by mass, proportion of propylene-derived structural unit: 96 % by mass) (PPE P310A, C.I.TAKIRON Corporation, thickness: 2 mm) | - | - | - | - | - | - | - | - | - | - |
| | Polypropylene plate, dark gray (polyolefin resin content: 100% by mass, proportion of propylene-derived structural unit: 96 % by mass) (RPP 1950, C.I.TAKIRON Corporation, thickness: 2 mm) | - | - | - | - | - | - | - | Present | - | - |
| | Polycarbonate plate (polyolefin resin content: 0% by mass) (PC-1600, C.I.TAKIRON Corporation, thickness: 2 mm) | - | - | - | - | - | - | - | - | - | - |
| | Side with adherend member | Both sides | Both sides | Both sides | Both sides | Both sides | Both sides | Both sides | One side | Both sides | Both sides |
| 180° Peel force at 23°C of adhesive tape for polypropylene (N/25 mm) | | 9.0 | 9.0 | 10.0 | 11.0 | 10.0 | 16.0 | 14.0 | 12.0 | 15.0 | 15.0 |
| Amount of displacement of adhesive tape in holding test at high temperature for polypropylene plate (mm) | | 0.2 | 0.2 | 0.5 | 0.5 | 25.0 | 0.4 | 1.3 | 0.6 | 0 | 0 |
| Proportion of adhesive member in composite structure (% by mass) | | 1.0 | 1.0 | 0.5 | 0.5 | 1.0 | 1.0 | 1.0 | 1.0 | 1.0 | 1.0 |

EP 4 755 985 A1

35

| | | | Example | | | | | | | | | |
|---|---|---|---|---|---|---|---|---|---|---|---|---|
| | | | 21 | 22 | 23 | 24 | 25 | 26 | 27 | 28 | 29 | 30 |
| Evaluation | Recyclability | Impact strength of molded article molded from member alone (kJ/m$^2$) | 6.5 | 6.5 | 6.5 | 6.5 | 6.5 | 6.5 | 6.5 | 6.6 | 6.5 | 6.5 |
| | | Charpy impact resistance decrease percentage (%) | 3.0 | 5.0 | 4.0 | 5.0 | 1.0 | 1.0 | -4.0 | 5.0 | 3.0 | 3.0 |
| | | Rating | ○○ | ○○ | ○○ | ○○ | ○○ | ○○ | ○○ | ○○ | ○○ | ○○ |

**[0291]** [0161]

[Table 5]

| | | | Example | | | | | | | | |
|---|---|---|---|---|---|---|---|---|---|---|---|
| | | | 31 | 32 | 33 | 34 | 35 | 36 | 37 | 38 | 39 |
| Adhesive member (adhesive tape) | Substrate | Olefin fiber non-woven fabric (proportion of olefin-derived structural unit: 100% by mass) (All Olefin Paper-20, Nippon Paper Papylia Co., Ltd., thickness: 90 μm, melting point: 130°C) | - | - | - | - | - | - | - | - | - |
| | | Cast polypropylene film (proportion of olefin (propylene)-derived structural unit: 100% by mass) (Torayfan NO, Toray Industries Inc., thickness: 50 μm, melting point: 160°C) | - | - | - | - | - | - | - | - | - |
| | | Styrene elastomer-containing film (polypropylene:SEBS block copolymer (mass ratio 9:1)) (thickness: 100 μm, melting point: 160°C) | - | - | - | - | - | - | - | - | Present |
| | Adhesive layer | Type of adhesive | A | A | S | T | U | V | W | X | A |
| | | Side with adhesive layer | Both sides | Both sides | Both sides | Both sides | Both sides | Both sides | Both sides | Both sides | Both sides |
| | | Thickness of each adhesive layer (μm) | 50 | 50 | 50 | 50 | 50 | 50 | 50 | 50 | 50 |
| Primer layer | | Urethane primer (K-500, 3M) | - | - | - | - | - | - | - | - | - |
| | | Polyolefin primer (Surflen P-1000, Mitsubishi Chemical Corporation) | - | - | - | - | - | - | - | - | - |
| | | Acrylic primer (aminoethylated acrylic polymer, Polyment NK-350, Nippon Shokubai Co., Ltd.) | - | - | - | - | - | - | - | - | - |
| | | Chlorinated polypropylene primer (Hardlen 13-LP, TOYOBO MC Corporation) | Present | - | - | - | - | - | - | - | - |
| | | Metal alkoxide primer (AP111, 3M) | - | Present | - | - | - | - | - | - | - |

| | | Example | | | | | | | | |
|---|---|---|---|---|---|---|---|---|---|---|
| | | 31 | 32 | 33 | 34 | 35 | 36 | 37 | 38 | 39 |
| Adherend member | Injection molding grade block polypropylene (polyolefin resin content: 100 % by mass) (NOVATEC PP BC10HRF, Japan Polypropylene Corporation, thickness: 2 mm) | Present | Present | Present | Present | Present | Present | Present | Present | Present |
| | Injection molding grade block polypropylene (polyolefin resin content: 100 % by mass) (NOVATEC PP BC03B, Japan Polypropylene Corporation, thickness: 2 mm) | - | - | - | - | - | - | - | - | - |
| | Injection molding grade homopolypropylene (polyolefin resin (polypropylene) content: 100 % by mass) (SA08A, Japan Polypropylene Corporation, thickness: 2 mm) | - | - | - | - | - | - | - | - | - |
| | Polypropylene plate (polyolefin resin content: 100% by mass, proportion of propylene-derived structural unit: 96 % by mass) (PPE P310A, C.I.TAKIRON Corporation, thickness: 2 mm) | - | - | - | - | - | - | - | - | - |
| | Polypropylene plate, dark gray (polyolefin resin content: 100% by mass, proportion of propylene-derived structural unit: 96 % by mass) (RPP 1950, C.I.TAKIRON Corporation, thickness: 2 mm) | - | - | - | - | - | - | - | - | - |
| | Polycarbonate plate (polyolefin resin content: 0% by mass) (PC-1600, C.I.TAKIRON Corporation, thickness: 2 mm) | - | - | - | - | - | - | - | - | - |
| | Side with adherend member | Both sides | Both sides | Both sides | Both sides | Both sides | Both sides | Both sides | Both sides | Both sides |
| 180° Peel force at 23°C of adhesive tape for polypropylene (N/25 mm) | | 15.0 | 12.0 | 13.0 | 14.0 | 12.0 | 12.0 | 13.0 | 12.0 | 13.0 |
| Amount of displacement of adhesive tape in holding test at high temperature for polypropylene plate (mm) | | 0 | 0.2 | 0.3 | 0.2 | 0.3 | 0.3 | 0.4 | 3.0 | 0.4 |
| Proportion of adhesive member in composite structure (% by mass) | | 1.0 | 1.0 | 1.0 | 1.0 | 1.0 | 1.0 | 1.0 | 1.0 | 1.0 |
| Evaluation | Recyclability — Impact strength of molded article molded from member alone (kJ/m$^2$) | 6.5 | 6.5 | 6.5 | 6.5 | 6.5 | 6.5 | 6.5 | 6.5 | 6.5 |
| | Recyclability — Charpy impact resistance decrease percentage (%) | 3.0 | 6.0 | 6.0 | 6.0 | 5.5 | 4.0 | 3.0 | 2.0 | 4.0 |
| | Recyclability — Rating | ○○ | ○ | ○ | ○ | ○ | ○○ | ○○ | ○○ | ○○ |

EP 4 755 985 A1

[Table 6]

| | | | Comparative Example | | |
|---|---|---|---|---|---|
| | | | 1 | 2 | 3 |
| Adhesive member (adhesive tape) | Substrate | Olefin fiber non-woven fabric (proportion of olefin-derived structural unit: 100% by mass) (All Olefin Paper-20, Nippon Paper Papylia Co., Ltd., thickness: 90 μm, melting point: 130°C) | - | Present | - |
| | | Cast polypropylene film (proportion of olefin (propylene)-derived structural unit: 100% by mass) (Torayfan NO, Toray Industries Inc., thickness: 50 μm, melting point: 160°C) | - | - | - |
| | | Styrene elastomer-containing film (polypropylene:SEBS block copolymer (mass ratio 9:1)) (thickness: 100 μm, melting point: 160°C) | - | - | - |
| | Adhesive layer | Type of adhesive | R | R | A |
| | | Side with adhesive layer | Both sides | Both sides | Both sides |
| | | Thickness of each adhesive layer (μm) | 50 | 50 | 50 |
| Primer layer | | Urethane primer (K-500, 3M) | - | - | - |
| | | Polyolefin primer (Surflen P-1000, Mitsubishi Chemical Corporation) | - | - | - |
| | | Acrylic primer (aminoethylated acrylic polymer, Polyment NK-350, Nippon Shokubai Co., Ltd.) | - | - | - |
| | | Chlorinated polypropylene primer (Hardlen 13-LP , TOYOBO MC Corporation) | - | - | - |
| | | Metal alkoxide primer (AP111, 3M) | - | - | - |
| Adherend member | | Injection molding grade block polypropylene (polyolefin resin content: 100 % by mass) (NOVATEC PP BC10HRF, Japan Polypropylene Corporation, thickness: 2 mm) | Present | Present | - |
| | | Injection molding grade block polypropylene (polyolefin resin content: 100 % by mass) (NOVATEC PP BC03B, Japan Polypropylene Corporation, thickness: 2 mm) | - | - | - |
| | | Injection molding grade homopolypropylene (polyolefin resin (polypropylene) content: 100 % by mass) (SA08A, Japan Polypropylene Corporation, thickness: 2 mm) | - | - | - |
| | | Polypropylene plate (polyolefin resin content: 100% by mass, proportion of propylene-derived structural unit: 96 % by mass) (PPE P310A, C.I.TAKIRON Corporation, thickness: 2 mm) | - | - | - |
| | | Polypropylene plate, dark gray (polyolefin resin content: 100% by mass, proportion of propylene-derived structural unit: 96 % by mass) (RPP 1950, C.I.TAKIRON Corporation, thickness: 2 mm) | - | - | - |
| | | Polycarbonate plate (polyolefin resin content: 0% by mass) (PC-1600, C.I.TAKIRON Corporation, thickness: 2 mm) | - | - | Present |
| | | Side with adherend member | Both sides | Both sides | Both sides |
| 180° Peel force at 23°C of adhesive tape for polypropylene (N/25 mm) | | | 6.8 | 6.8 | 10.0 |
| Amount of displacement of adhesive tape in holding test at high temperature for polypropylene plate (mm) | | | 0.1 | 0.1 | 0.4 |
| Proportion of adhesive member in composite structure (% by mass) | | | 1.0 | 1.0 | 1.0 |

(continued)

| | | | Comparative Example | | |
|---|---|---|---|---|---|
| | | | 1 | 2 | 3 |
| Evaluation | Recyclability | Impact strength of molded article molded from member alone (kJ/m$^2$) | 6.5 | 6.5 | 84 |
| | | Charpy impact resistance decrease percentage (%) | 12.0 | 14.0 | 12.0 |
| | | Rating | × | × | × |

INDUSTRIAL APPLICABILITY

The present invention can provide a composite structure that allows the adhesive member and the adherend members to be recycled without separation. The present invention can also provide a polyolefin resin molded article molded from the composite structure. The present invention can also provide an automobile member including the composite structure or the polyolefin resin molded article. The present invention can also provide a method for producing a polyolefin resin molded article using the composite structure.

REFERENCE SIGNS LIST

1 adhesive tape
2 polypropylene plate
3 500-g weight

**Claims**

1.  A composite structure comprising:

    an adhesive member; and
    an adherend member,
    the adhesive member including an adhesive formed from an adhesive composition,
    the adhesive composition containing an acrylic copolymer including a structural unit derived from an alkyl (meth) acrylate and a structural unit derived from an olefin polymer having a polymerizable unsaturated double bond at an end,
    the adherend member including a member containing a polyolefin resin.

2.  The composite structure according to claim 1,
    wherein two or more types of the adherend members are bonded to each other with the adhesive member.

3.  The composite structure according to claim 1 or 2,
    wherein the polyolefin resin in the adherend member includes a polypropylene block copolymer.

4.  The composite structure according to claim 1, 2, or 3,
    wherein the adherend member contains at least one colorant selected from the group consisting of a pigment and a dye.

5.  The composite structure according to claim 1, 2, 3, or 4,

    wherein in the adhesive composition, a proportion of the structural unit derived from an olefin polymer having a polymerizable unsaturated double bond at an end in the acrylic copolymer is 5% by mass or more, and
    the composite structure satisfies at least one feature selected from the group consisting of the following first feature, second feature, and third feature:

first feature: (1) the structural unit derived from an alkyl (meth)acrylate includes no structural unit derived from an alkyl (meth)acrylate containing an alcohol-derived C1-C4 alkyl group, or the structural unit derived from an alkyl (meth)acrylate includes a structural unit derived from an alkyl (meth)acrylate containing an alcohol-derived C1-C4 alkyl group and a proportion of the structural unit derived from an alkyl (meth)acrylate containing an alcohol-derived C1-C4 alkyl group in the acrylic copolymer is 30% by mass or less, and (2) the adhesive has a gel fraction of 10% by mass or more and 90% by mass or less;

second feature: (1) the structural unit derived from an alkyl (meth)acrylate includes a structural unit derived from an alkyl (meth)acrylate containing an alcohol-derived C1-C4 alkyl group, and a proportion of the structural unit derived from an alkyl (meth)acrylate containing an alcohol-derived C1-C4 alkyl group in the acrylic copolymer is more than 10% by mass and 60% by mass or less, and (2) the adhesive has a gel fraction of 55% by mass or less; and

third feature: (1) the acrylic copolymer has an SP value of 9.30 $(cal/cm^3)^{1/2}$ or greater and 9.95 $(cal/cm^3)^{1/2}$ or less, and (2) the adhesive has a gel fraction of 10% by mass or more and 55% by mass or less.

6. The composite structure according to claim 1, 2, 3, 4, or 5,

   wherein the acrylic copolymer includes a structural unit derived from a monomer containing a polar functional group,
   the structural unit derived from a monomer containing a polar functional group includes at least one selected from the group consisting of a structural unit derived from a carboxy group-containing monomer and a structural unit derived from a hydroxy group-containing monomer.

7. The composite structure according to claim 6,
   wherein the structural unit derived from a monomer containing a polar functional group includes the structural unit derived from a hydroxy group-containing monomer.

8. The composite structure according to claim 7,

   wherein the structural unit derived from an alkyl (meth)acrylate includes a structural unit derived from an alkyl (meth)acrylate containing an alcohol-derived C7 or higher alkyl group, and a proportion of the structural unit derived from an alkyl (meth)acrylate containing an alcohol-derived C7 or higher alkyl group in the acrylic copolymer is 5% by mass or more and 90% by mass or less,
   the structural unit derived from a monomer containing a polar functional group includes no structural unit derived from a carboxy group-containing monomer, or the structural unit derived from a monomer containing a polar functional group includes the structural unit derived from a carboxy group-containing monomer and a proportion of the structural unit derived from a carboxy group-containing monomer in the acrylic copolymer is 8% by mass or less, and
   a proportion of the structural unit derived from a hydroxy group-containing monomer in the acrylic copolymer is 0.01% by mass or more.

9. The composite structure according to claim 1, 2, 3, 4, 5, 6, 7, or 8,
   wherein the adhesive contains a tackifier resin.

10. The composite structure according to claim 9,
    wherein the adhesive contains the tackifier resin in an amount of 40 parts by mass or less relative to 100 parts by mass of the acrylic copolymer.

11. The composite structure according to claim 1, 2, 3, 4, 5, 6, 7, 8, 9, or 10,
    wherein the adhesive member is an adhesive tape including an adhesive layer containing the adhesive.

12. The composite structure according to claim 11,
    wherein the adhesive layer has a thickness of 5 $\mu$m or greater and 75 $\mu$m or less.

13. The composite structure according to claim 11 or 12,
    wherein the adhesive tape includes no substrate.

14. The composite structure according to claim 11 or 12,

wherein the adhesive tape includes a substrate, and
the substrate contains a polyolefin resin.

15. The composite structure according to claim 11, 12, 13, or 14,
    wherein the adhesive tape has a 180° peel force at 23°C for a polypropylene plate of 5.0 N/25 mm or greater.

16. The composite structure according to claim 1, 2, 3, 4, 5, 6, 7, 8, 9, 10, 11, 12, 13, 14, or 15,
    wherein a proportion of the adhesive member in the composite structure is 0.1% by mass or more and 3.0% by mass or less.

17. The composite structure according to claim 1, 2, 3, 4, 5, 6, 7, 8, 9, 10, 11, 12, 13, 14, 15, or 16, comprising a primer layer between the adherend member and the adhesive member.

18. The composite structure according to claim 17,
    wherein the primer layer contains a primer that is at least one selected from the group consisting of a polyolefin primer, a urethane primer, and a metal alkoxide primer.

19. A polyolefin resin molded article molded from the composite structure according to claim 1, 2, 3, 4, 5, 6, 7, 8, 9, 10, 11, 12, 13, 14, 15, 16, 17, or 18.

20. An automobile member comprising:

    the composite structure according to claim 1, 2, 3, 4, 5, 6, 7, 8, 9, 10, 11, 12, 13, 14, 15, 16, 17, or 18; or
    the polyolefin resin molded article according to claim 19.

21. A method for producing a polyolefin resin molded article, comprising
    a step of molding the composite structure according to claim 1, 2, 3, 4, 5, 6, 7, 8, 9, 10, 11, 12, 13, 14, 15, 16, 17, or 18 without separation.

FIG.1

## INTERNATIONAL SEARCH REPORT

| International application No. |
|---|
| **PCT/JP2024/027687** |

**A. CLASSIFICATION OF SUBJECT MATTER**

*C09J 151/00*(2006.01)i; *B32B 27/00*(2006.01)i; *B32B 27/30*(2006.01)i; *C08F 220/00*(2006.01)i; *C09J 7/22*(2018.01)i; *C09J 7/24*(2018.01)i; *C09J 7/38*(2018.01)i; *C09J 11/08*(2006.01)i; *C09J 123/00*(2006.01)i; *C09J 133/00*(2006.01)i; *C09J 133/02*(2006.01)i; *C09J 133/04*(2006.01)i; *C09J 133/06*(2006.01)i; *C09J 133/14*(2006.01)i
FI: C09J151/00; B32B27/00 M; B32B27/30 A; C08F220/00; C09J7/22; C09J7/24; C09J7/38; C09J11/08; C09J123/00; C09J133/00; C09J133/02; C09J133/04; C09J133/06; C09J133/14

According to International Patent Classification (IPC) or to both national classification and IPC

**B. FIELDS SEARCHED**

Minimum documentation searched (classification system followed by classification symbols)

C09J151/00; B32B27/00; B32B27/30; C08F220/00; C09J7/22; C09J7/24; C09J7/38; C09J11/08; C09J123/00; C09J133/00; C09J133/02; C09J133/04; C09J133/06; C09J133/14

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2003-13028 A (SEKISUI CHEMICAL CO., LTD.) 15 January 2003 (2003-01-15) claims, [0001]-[0003], [0012], [0015]-[0025], [0039]-[0043], examples, particularly, table 1, paragraph [0062] | 1-21 |
| A | JP 2015-52050 A (TEIJIN LIMITED) 19 March 2015 (2015-03-19) entire text | 1-21 |
| A | JP 2015-21067 A (DIC CORPORATION) 02 February 2015 (2015-02-02) entire text | 1-21 |
| A | JP 2015-120876 A (NITTO DENKO CORPORATION) 02 July 2015 (2015-07-02) entire text | 1-21 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 September 2024** | **08 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

**INTERNATIONAL SEARCH REPORT**
Information on patent family members

International application No.

**PCT/JP2024/027687**

| Patent document cited in search report | | | Publication date (day/month/year) | Patent family member(s) | | | Publication date (day/month/year) |
|---|---|---|---|---|---|---|---|
| JP | 2003-13028 | A | 15 January 2003 | (Family: none) | | | |
| JP | 2015-52050 | A | 19 March 2015 | (Family: none) | | | |
| JP | 2015-21067 | A | 02 February 2015 | (Family: none) | | | |
| JP | 2015-120876 | A | 02 July 2015 | CN | 104650757 | A | |
| | | | | CN | 112143396 | A | |
| | | | | CN | 104650758 | A | |
| | | | | CN | 112143397 | A | |
| | | | | JP | 2015-120877 | A | |
| | | | | JP | 2018-193558 | A | |
| | | | | JP | 2018-193557 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015052050 A
- JP 2015021067 A

- JP 2015120876 A

**Non-patent literature cited in the description**

- **R. F. FEDORS**. *Polym. Eng. Sci*, 1974, vol. 14 (2), 147-154